(19) Europäisches Patentamt

European Patent Office

Office européen des brevets

(11) EP 1 516 893 A1

(12) EUROPEAN PATENT APPLICATION
published in accordance with Art. 158(3) EPC

(43) Date of publication:
23.03.2005 Bulletin 2005/12

(51) Int Cl.7: **C08L 101/00**, C08K 5/09, C08J 9/26, C01B 31/08, H01G 9/058

(21) Application number: 03733254.1

(22) Date of filing: 03.06.2003

(86) International application number:
PCT/JP2003/006978

(87) International publication number:
WO 2003/106565 (24.12.2003 Gazette 2003/52)

(84) Designated Contracting States:
AT BE BG CH CY CZ DE DK EE ES FI FR GB GR HU IE IT LI LU MC NL PT RO SE SI SK TR

(30) Priority: 03.06.2002 JP 2002161119

(71) Applicant: SANYO CHEMICAL INDUSTRIES, LTD.
Kyoto-shi, Kyoto 605-0995 (JP)

(72) Inventors:
• GUAN, Shiyou,
c/o SANYO CHEMICAL INDUSTRIES, LTD.
Kyoto-shi, Kyoto 605-0995 (JP)

• ARAKI, Fumikazu,
c/o SANYO CHEMICAL INDUSTRIES LTD
Kyoto-shi, Kyoto 605-0995 (JP)

(74) Representative: Jones, Helen Marjorie Meredith
Gill Jennings & Every,
Broadgate House,
7 Eldon Street
London EC2M 7LH (GB)

(54) **MICELLE-CONTAINING ORGANIC POLYMER, ORGANIC POLYMER POROUS MATERIAL AND POROUS CARBON MATERIAL**

(57) The invention provides a micelle-containing organic polymer

which comprises at least one peak in its X-ray diffraction pattern,

at least one pair of the diffraction angle ($2\theta$) and the lattice spacing (d) of said peak satisfying the relation (1) given below:

$$2\theta = 2\sin^{-1}(\lambda/2d) \qquad (1)$$

(in the formula, $\lambda$ represents the wavelength (nm) of the characteristic X-ray K$\alpha$1)

and d being at least one value within the range of not less than 0.8 nm to not more than 150 nm.

The invention also provides an organic polymer porous material or a porous carbon material which comprises the total volume of pores having diameters within the range of $\pm 40\%$ of the pore diameter Dmax showing a maximum peak in a pore diameter distribution curve is not smaller than 50% by volume based on the total pores volume.

Fig. 1

EP 1 516 893 A1

**Description**

TECHNICAL FIELD

The present invention relates to a micelle-containing organic polymer, an organic polymer porous material, and a porous carbon material. More particularly, the invention relates to a three-dimensional structure of an organic material useful as an electrode, adsorbent, and the like, and to a method of producing the same.

BACKGROUND ART

Known in the art as mesoporous substances are inorganic mesoporous substances constituted of a silica-based three-dimensional structure and having relatively uniform pores with a size of 1.5 to 10 nm, and organic/inorganic composite polymer-based mesoporous substances having uniform pores (e.g. Japanese Kokai Publications Hei-08-67578 and 2000-17102).

The term "mesoporous" as used herein refers to "having pores of 2 to 50 nm in diameter".

A carbon material having uniform pores is also known which is obtained by polymerizing furfuryl alcohol in the presence of a siliceous mesoporous powder called SBA-15 as a template, sintering the resulting polymer for carbonization, and dissolving and removing the template mesoporous powder with hydrofluoric acid to give uniform pores transcribed with the template mesoporous structure (e.g. Nature, vol. 412, page 12, published in July, 2002).

However, the former mesoporous material is a porous inorganic or organic/inorganic composite material and therefore is brittle and fragile. Hence, its moldability is very poor, and it can be obtained only in a powder form. The problem is that it cannot be obtained in the form of lumps, fibers, sheets, films, etc.

The latter carbon material obtained by using the former mesoporous powder as a template is obtained only in the form of a powder with a very small particle size. The problem is that it cannot be made into the form of lumps, fibers, sheets, films, etc.

Further, for obtaining a carbon material having uniform pore size, it is necessary to remove the mesoporous powder, which is used as a template, and, on that occasion, another problem arises, namely hazardous hydrofluoric acid or the like must be used.

SUMMARY OF THE INVENTION

Thus, it is an object of the present invention to provide a porous material having uniform pore size and excellent moldability and, further, to provide a porous carbon material having uniform pore size and a variety of forms, e.g. the form of lumps, fibers, sheets, films, etc.

The present inventors have made intensive investigations, and as a result, they found that when a specific micelle-containing organic polymer is used, the above object can be accomplished. Thereby, the present invention has been completed.

That is, the invention relates to

a micelle-containing organic polymer

which comprises at least one peak in its X-ray diffraction pattern,

at least one pair of the diffraction angle (2θ) and the lattice spacing (d) of said peak satisfying the relation (1) given below:

$$2\theta = 2\sin^{-1}(\lambda/2d) \qquad (1)$$

(in the formula, λ represents the wavelength (nm) of the characteristic X-ray Kα1)

and d being at least one value within the range of not less than 0.8 nm to not more than 150 nm.

Moreover, the invention relates to

an organic polymer porous material or a porous carbon material

which comprises the total volume of pores $\sum V$ having diameters within the range of ± 40% of the pore diameter Dmax showing a maximum peak in a pore diameter distribution curve is not smaller than 50% by volume based on the total pores volume V.

Furthermore, the invention relates to

a method of producing a micelle-containing organic polymer

which comprises forming micelles of the surfactant (A) in a monomer and/or prepolymer, and then subjecting the monomer and/or prepolymer to polymerization and curing;

a method of producing an organic polymer porous material

which comprises forming the above micelle-containing organic polymer, and further removing the surfactant (A) from said polymer; and

a method of producing a porous carbon material

which comprises forming the above micelle-containing organic polymer, and further baking said polymer for carbonization.

Hereinafter, the present invention is described in detail.

DETAILED DESCRIPTION OF THE INVENTION

In the practice of the invention, the X-ray diffraction pattern can be obtained, for example, by the small angle scattering method, which is one of the techniques of X-ray diffractometry.

X-ray diffractometry utilizes the principle of Thomson scattering according to which incident X-rays are partly scattered in a substance without any change in wavelength. The small angle scattering method utilizes the fact that where there are fine particles or density fluctuating regions with a size of about 1 to 150 nm, diffuse scattering occurs in the direction of incident X-rays. This scattering is found irrespective of whether the substance is crystalline or noncrystalline, and has the property such that it becomes more diffused as the size of the particles or the fluctuations in density become smaller, irrespective of their internal structures.

The X-ray diffraction pattern obtained by such a method is a result obtained by plotting the scattering intensity of the test substance at each diffraction angle, with the ordinate denoting the scattering intensity and the abscissa denoting the diffraction angle ($2\theta$). The wavelength of the characteristic X-ray $K\alpha 1$ of the metal used in the measurement is represented by $\lambda$.

That the X-ray diffraction pattern has at least one peak and at least one pair of the diffraction angle ($2\theta$) and the lattice spacing (d) of said peak substantially satisfies the relation (1) within the measurement error range indicates the structure being such a structure in which lattice planes are regularly arranged with a lattice spacing (d) of not less than 0.8 nm to not more than 150 nm.

The substance having such a characteristic of X-ray diffraction pattern satisfies one of the following conditions (1) to (3):

(1) That it shows uniformity in micelle diameters Dm or pore diameters Dp and in micelle or pore shapes.
(2) That it shows uniformity in pore or micelle shapes and regularity in the arranged configuration of micelles or pores.
(3) That it shows uniformity in micelle diameters Dm or pore diameters Dp and regularity in the arranged configuration of micelles or pores.

The term "micelle", as used herein, of the micelle-containing organic polymer, micelle diameter and the like refers to an aggregate of surfactant molecules.

As an example of the micelle-containing organic polymer of the invention, there may be mentioned a structure in which a surfactant (A) or the like forms micelles in an organic polymer (B) forming a polymer matrix.

The lattice spacing (d) relates to the micelle diameter or pore diameter.

(1) When the space group can be specified, the micelle diameter (Dm) can be roughly estimated in the following manner.

1) First, the space group of the micelle-containing polymer is specified. The micelle-containing polymer is subjected to X-ray diffractometry and the lattice spacing of the micelle-containing polymer (d1) is determined. The lattice constant (r1) of the space group of the micelle-containing polymer is determined from the space group specified and the lattice spacing (d1) obtained as a result of the measurement.
2) The space group of the organic polymer porous material obtained by removing micelles by the method described later is specified. The organic polymer porous material is subjected to X-ray diffractometry, and the lattice spacing of the organic polymer porous material (d2) is determined. The lattice constant (r2) of the space group of the organic polymer porous material is determined from the specified space group of the organic polymer porous material and the lattice spacing (d2) obtained as a result of the measurement.
3) The pore diameter (Dp) of the organic polymer porous material obtained by removing micelles by the method described later is determined using a pore distribution curve, as described later herein.
4) The micelle diameter (Dm) is calculated from the following formula (2):

$$(Dm) = (Dp) \times (r1) / (r2) \tag{2}$$

(2) When the space group of the micelle-containing polymer cannot be specified, the micelle diameter cannot be specified. However, the lattice spacing (d) can be used as an indicator of the micelle diameter.
(3) When the space group of the organic polymer porous material or the porous carbon material cannot be specified, the pore diameter cannot be specified. However, the lattice spacing (d) can be used as an indicator of the pore diameter.

The micelle-containing organic polymer of the invention preferably has a lattice spacing (d) (nm) of not less than 0.8, more preferably not less than 1, particularly preferably not less than 2, and preferably not more than 150, more preferably not more than 100, particularly preferably not more than 50.

When the lattice spacing (d) (nm) of the micelle-containing organic polymer of the invention is less than 0.8, the micelle diameter or pore diameter (nm) inevitably becomes less than 0.8, thus this cannot be said to be favorable for its use in ink jet receiving layers, electric double layer capacitors, catalyst supports and the like since there is a tendency to make it difficult for inks, ions, molecules, etc. to penetrate into the pores.

Moreover, when it exceeds 150, the use of the polymer in ink jet receiving layers, electric double layer capacitors, catalyst supports, etc. may unfavorably cause decreases in surface area, adsorption ability and electric characteristics, and the like.

As the shape of micelles in the micelle-containing organic polymer of the invention, there may be mentioned rod- or bar-like, spherical, lamellar forms, and the like.

The arrangement of micelles in the micelle-containing organic polymer of the invention may have regularity or no regularity. Preferably, it has regularity, though.

That the arrangement of micelles has regularity means that the arranged structure of micelles shows symmetry as represented by the space group.

The term "space group" refers to a group formed of a set of symmetry elements.

The symmetry elements are used to describe the symmetry resulting from regular and infinite three-dimensional arrangement of atoms, particles, holes, micelles and the like, and include the five rotation axes, center of symmetry, mirror planes, rotatory reflection axes, translations, screw axes and gliding reflection planes, and the like. There are 230 possible combinations of such symmetry elements, and all the regular arrangements can be described by them. Detailed explanations and illustrations of all the space groups are found in International Table of Crystallography, Vol. A (D. Reidel, 1987).

As such space groups, for example, there may be mentioned those shown in Table 1.

Table 1

| Space group name | Reference Drawing |
|---|---|
| 2-d hexagonal p6mm | Fig.1 |
| cubic Ia3d | Fig.2 |
| cubic Pm3n | Fig. 3 |
| 3-d hexagonal P6$_3$/mmc | Fig. 4 |

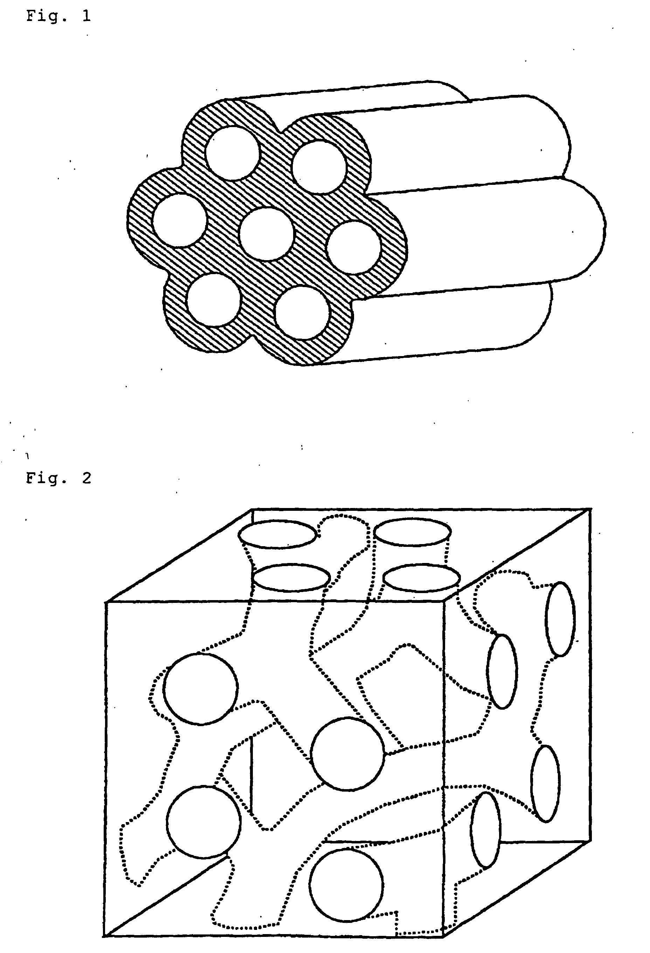

Fig. 1 is a schematic sectional perspective view of the state in which micelles or pores and an organic polymer, or pores and carbon form the space group "2-d hexagonal p6mm". In this section, the shaded area represents the organic polymer or carbon, and the white circles represent pores or micelles. Thus, the micelles or pores are regularly arranged in the organic polymer or carbon. Fig. 1 shows only one unit of the space group. However, in the micelle-containing organic polymer, organic polymer porous material or porous carbon material of the invention, a large number of such forms are joined together (the same shall apply for other figures).

Fig. 2 is a schematic sectional perspective view of the state in which micelles or pores and an organic polymer, or pores and carbon form the space group "cubic Ia3d". Cylindrical micelles or pores portrayed by dotted lines are three-dimensionally connected to one another and regularly arranged in the organic polymer or carbon.

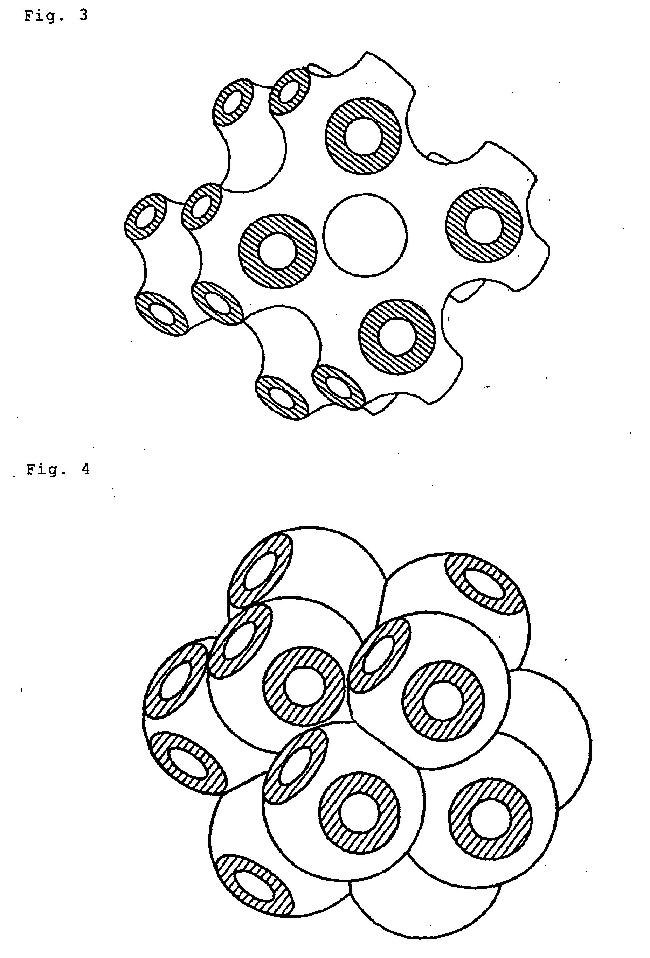

Fig. 3 is a schematic sectional perspective view of the state in which micelles or pores and an organic polymer, or pores and carbon form the space group "cubic Pm3n". The shaded areas indicate the sections of the organic polymer or carbon, and they are arranged regularly so as to surround the spherical micelles or pores in the pointed sugar candy ball (Kompeito)-like or tetrapod-like manner.

Fig. 4 is a schematic sectional perspective view of the state in which micelles or pores and an organic polymer, or pores and carbon form the space group "3-d hexagonal P6₃/mmc". The shaded areas indicate the sections of the organic polymer or carbon, and they are regularly arranged so as to surround the spherical micelles or pores.

The micelle-containing organic polymer of the invention is only required to have a structure comprised of a surfactant (A), for instance, forming micelles in an organic polymer (B) constituting a polymer matrix, and the structure is not particularly restricted provided that the X-ray diffraction pattern thereof has at least one peak and the diffraction angle (2θ) of at least one peak and the lattice spacing (d) satisfy the relation (1).

The surfactant (A) is not particularly restricted but may be any of the anionic surfactants (A1), cationic surfactants (A2), nonionic surfactants (A3) and amphoteric surfactants (A4) known in the art.

Employable as the anionic surfactants (A1) are carboxylic acids and salts thereof (A1a), sulfate esters and salts thereof (A1b), carboxylmethylation products and salts thereof (A1c), sulfonic acids and salts thereof (A1d), phosphate esters and salts thereof (A1e), and the like.

Employable as the carboxylic acids and salts thereof (A1a) are saturated or unsaturated fatty acids containing 8 to 22 carbon atoms such as capric acid, lauric acid, myristic acid, palmitic acid, stearic acid, oleic acid and linolic acid; nature-derived higher fatty acids; aromatic carboxylic acids containing 8 to 22 carbon atoms such as 4-methylsalicylic acid; salts of these; and the like.

Employable as the salts of these are salts resulting from combinations of the above-mentioned carboxylic acids serving as anions and the following cations.

Employable as the salt-forming cations are alkali metals, alkaline earth metals, ammonium ions, and the like.

As the alkali metals, there may be mentioned lithium, sodium, potassium, and the like. As the alkaline earth metals, there may be mentioned barium, calcium, and the like.

Employable as the sulfate esters and salts thereof (A1b) are higher alcohol sulfate esters, for example sulfuric acid monoesters of aliphatic alcohols containing 8 to 22 carbon atoms such as octyl alcohol, decyl alcohol and lauryl alcohol; higher alkyl ether sulfate esters, for example sulfuric acid monoesters of alkylene oxide (hereinafter referred to as "AO" for short) adducts (number of moles added 1 to 20) of alcohols containing 8 to 22 carbon atoms; sulfated oils derived from natural oils and fats containing carboxylic acid residues containing 8 to 22 carbon atoms; sulfated fatty acid esters derived from unsaturated fatty acid esters containing 8 to 30 carbon atoms, for example butyl oleate, butyl ricinolate and butyl linolate; sulfated olefins derived from olefins containing 8 to 22 carbon atoms such as octene, dodecene and octadecene; salts of these; and the like.

The AO may be one containing 2 to 4 carbon atoms and includes ethylene oxide (hereinafter referred to as "EO" for short), propylene oxide (hereinafter referred to as "PO" for short), 1,2-, 2,3- and 1,3-butylene oxide, tetrahydrofuran, etc. A single one of these may be added or two or more AOs may be added in the manner of random addition or block addition.

Employable as the carboxymethylation products and salts thereof (A1c) are carboxymethylation products derived from aliphatic alcohols containing 8 to 22 carbon atoms; carboxymethylation products derived from aliphatic alcohol-AO adducts; salts of these; and the like.

Employable as the sulfonic acids and salts thereof (A1d) are alkylbenzenesulfonic acids such as octylbenzenesulfonic acid, dodecylbenzenesulfonic acid and octadecylbenzenesulfonic acid; alkylnaphthalenesulfonic acids such as octylnaphthalenesulfonic acid; sulfo-fatty acid esters such as sulfosuccinic acid di-2-ethylhexyl ester and sulfosuccinic acid dioctadecyl ester; α-olefinsulfonic acids; Igepon T type sulfonic acids; salts of these; and the like.

Employable as the salts of these are salts resulting from combination of sulfonic acid anions with those cations enumerated hereinabove referring to (A1a).

Employable as the phosphate esters and salts thereof (A1e) are higher alcohol phosphate esters such as lauryl alcohol phosphate monoester and lauryl alcohol phosphate diester; higher alcohol-AO adduct phosphate esters; salts of these; and the like.

Employable as the cationic surfactants (A2) are quaternary ammonium salt type cationic surfactants (A2a), amine salt type cationic surfactants (A2b), and the like.

Employable as the quaternary ammonium salt type cationic surfactants (A2a) are, for example, quaternary ammonium salts comprising: tetraalkylammonium cations (each alkyl group preferably containing 1 to 18 carbon atoms) such as octyltrimethylammonium chloride, cetyltrimethylammonium chloride, stearyltrimethylammonium chloride, lauryltrimethylammonium chloride and didecyldimethylammonium chloride; an ammonium cation containing a benzyl group and alkyl groups (the number of carbon atoms is preferably 1 to 18), for example lauryldimethylbenzylammonium chloride (benzalkonium chloride); a pyridinium cation, for example cetylpyridinium chloride and oleylpyridinium chloride; or an ammonium cation containing a polyoxyalkylene group and alkyl groups (the number of carbon atoms is preferably 1 to 18).

Employable as the anions constituting these quaternary ammonium salts are a hydroxide ion, halogen ion (e. g. a fluoride ion, chloride ion, bromide ion, iodide ion), nitrate ion, nitrite ion, methosulfate ion, and carboxyl anion containing 1 to 8 carbon atoms (e.g. an anion derived from formic acid, acetic acid, propionic acid, 2-ethylhexanoic acid, lactic acid, malic acid or gluconic acid), and the like.

Employable as the amine salt type cationic surfactants (A2b) are primary amine salts such as laurylamine chloride, stearylamine bromide and cetylamine methosulfate; secondary amine salts such as laurylmethylamine chloride, stearylethylamine bromide, dilaurylamine methosulfate and laurylpropylamine acetate; tertiary amine salts such as lauryldiethylamine chloride and laurylethylmethylamine bromide; and the like.

Employable as the nonionic surfactants (A3) are AO adduct type nonionic surfactants (A3a), polyhydric alcohol type nonionic surfactants (A3b), and the like.

Employable as the AO adduct type nonionic surfactants (A3a) are AO adducts (number of moles added 3 to 100) derived from saturated or unsaturated higher alcohols containing 8 to 22 carbon atoms such as 2-ethylhexyl alcohol, dodecyl alcohol, oleyl alcohol, linolyl alcohol and obtusil alcohol; AO adducts derived from saturated or unsaturated carboxylic acids containing 8 to 22 carbon atoms, for example stearic acid-EO adducts (number of moles added 10 to 50 moles), oleic acid-EO adducts (number of moles added 10 to 50 moles) and polyethylene glycol (molecular weight 400 to 2,000) dilaurate; AO adducts (number of moles added 10 to 120) derived from dihydric to octahydric alcohols containing 2 to 22 carbon atoms such as ethylene glycol, propylene glycol, glycerol, trimethylolpropane, ditrimethylolpropane, neopentyl alcohol, pentaerythritol, dipentaerythritol, sorbitan, sorbitol and sucrose; polyhydric alcohol carboxylate ester-AO adducts such as trimethylolpropane monostearate-EO (number of moles added 10 to 50 moles)/PO (number of moles added 10 to 50 moles) random adducts, sorbitan monostearate-EO adducts (number of moles added 10 to 50 moles) and sorbitan dilaurate-EO (number of moles added 10 to 50 moles)/PO (number of moles added 10 to 50 moles) random adducts; polyhydric alcohol alkyl ether-AO adducts such as sorbitan monostearyl ether-EO adducts (number of moles added 10 to 50 moles), methyl glycoside-EO (number of moles added 10 to 50 moles)/PO (number of moles added 10 to 50 moles) random adducts and lauryl glycoside-EO adducts (number of moles added 10 to 50 moles); alkylphenol-AO adducts such as nonylphenol-EO (number of moles added 10 to 50 moles)/PO (number of moles added 10 to 50 moles) block adducts, octylphenol-EO adducts (number of moles added 10 to 50 moles) and bisphenol A-EO adducts (number of moles added 10 to 50 moles); higher alkylamine-AO adducts such as laurylamine-EO adducts (number of moles added 10 to 50 moles) and stearylamine-EO adducts (number of moles added 10 to 50 moles); carboxylic acid amide-AO adducts such as hydroxypropyloleamide-EO adducts (number of moles added 10 to 50 moles) and dihydroxyethyllauramide-EO adducts (number of moles added 10 to 50 moles); and the like.

Employable as the polyhydric alcohol type nonionic surfactants (A3b) are polyhydric alcohol carboxylic acid esters such as pentaerythritol monooleate and sorbitan monolaurate; polyhydric alcohol alkyl ethers such as pentaerythritol monolauryl ether, sorbitan monomethyl ether and lauryl glycoside; and the like.

Employable as the amphoteric surfactants (A4) are amino acid type amphoteric surfactants (A4a), betaine type amphoteric surfactants (A4b), imidazoline type amphoteric surfactants (A4c), and the like.

As the amino acid type amphoteric surfactants (A4a), there may be mentioned amphoteric surfactants having an amino group and a carboxyl group within the molecule, including alkylaminopropionic acid type amphoteric surfactants such as sodium stearylaminopropionate and potassium laurylaminopropionate; alkylaminoacetic acid type amphoteric surfactants such as sodium laurylaminoacetate and ammonium stearylaminoacetate; and the like.

As the betaine type amphoteric surfactants (A4b), there may be mentioned amphoteric surfactants having a quaternary ammonium salt type cationic moiety and a carboxylic acid type anionic moiety within the molecule, for example alkyldimethylbetaines such as stearyldimethylaminoacetic acid betaine and lauryldimethylaminoacetic acid betaine; amide betaines such as coconut oil fatty acid amidopropylbetaine; alkyldihydroxyalkylbetaines such as lauryldihydroxyethylbetaine; and the like.

As the imidazoline type amphoteric surfactants (A4c), there may be mentioned, for example, 2-undecyl-N-carboxymethyl-N-hydroxyethylimidazolinium betaine, 2-heptadecenyl-hydroxyethylimidazoline, and the like.

Preferred among such surfactants (A) are cationic surfactants (A2). More preferred are quaternary ammonium salt type cationic surfactants (A2a). Particularly preferred are quaternary ammonium salts comprising a tetraalkylammonium cation, and quaternary ammonium salts containing a benzyl group- and alkyl group-containing ammonium cation.

The surfactants (A) may be commercial products as such or may be ones produced by a method known in the art. A mixture of two or more species may also be used.

The amount of use (part(s) by weight) of (A) is preferably not less than 0.5, more preferably not less than 10, still more preferably not less than 30, particularly preferably not less than 50, and preferably not more than 200, more preferably not more than 150, still more preferably not more than 120, particularly preferably not more than 100, relative to 100 parts by weight of the organic polymer (B) forming a polymer matrix.

The shape of micelles and the space group of micelle arrangement are influenced mainly by the chemical structure of the surfactant (A). They are also influenced by the surfactant amount, temperature, medium species, etc.

The shape of micelles can be controlled through the balance between the hydrophilic group size and hydrophobic group size in the surfactant (A). A detailed relevant description can be found in the literature ("Chobunshi Kagaku (Supramolecular Chemistry)", published by Tokyo Kagaku Dozin, 1998).

For example, in an aqueous system, the micelle shape generally changes from spherical to rod- or bar-like, and from rod- or bar-like to lamellar as the volume occupied by the hydrophobic group increases relative to the length of the hydrophobic group (for example, the surfactant shape is supposed to be a triangular pyramid, and the base to be the hydrophilic group. Then, the volume of the triangular pyramid becomes the volume of the hydrophobic group, and the height becomes the length of the hydrophobic group. When triangular pyramids identical in volume are taken into consideration, those triangular pyramids shorter in height have a greater base area and it is considered that when they are arranged, they readily give spherical forms. On the other hand, those triangular pyramids longer in height have a smaller base area and it is considered that it becomes difficult for them to form spherical micelles).

The shape of micelles determines the space group which they can form.

As the space group which is possible when a surfactant capable of forming spherical micelles is used, there may be mentioned, for example 3-d hexagonal P6$_3$/mmc, cubic Pm3n, etc.

As the space group which is possible when a surfactant capable of forming rod- or bar-like micelles is used, there may be mentioned, for example 2-d hexagonal P6mm, cubic Ia3d, etc.

As the space group which is possible when a surfactant capable of forming lamellar micelles is used, there may be mentioned, for example Lamella L1, etc.

The polymer matrix-forming organic polymer (B) is not particularly restricted but may be any of those thermoplastic resins (B1) and thermosetting resins (B2) which are known in the art, and mixtures of these, and the like.

As the thermoplastic resins (B1), there may be mentioned vinyl resins (B1-1), polyesters (B1-2), polyamides (B1-3), polyurethanes (B1-4), polycarbonates (B1-5), and the like.

The vinyl resins (B1-1) can be obtained by polymerizing one or more non-crosslinkable vinyl monomers (b1).

The vinyl monomers (b1) to be used include vinylic hydrocarbons (b1-1), epoxy group-containing vinyl monomers (b1-2), vinyl esters (b1-3), vinyl ethers (b1-4), vinyl ketones (b1-5), alkyl (meth)acrylates (b1-6), polyoxyalkylene group-containing vinyl monomers (b1-7), carboxyl group-containing vinyl monomers (b1-8), sulfo group-containing vinyl monomers (b1-9), phosphono group-containing vinyl monomers (b1-10), hydroxyl group-containing vinyl monomers (b1-11), nitrogen-containing vinyl monomers (b1-12), halogen element-containing vinyl monomers (b1-13) and other vinyl monomers (b1-14).

To be used as the vinylic hydrocarbons (b1-1) are aliphatic vinylic hydrocarbons (b1-1a), alicyclic vinylic hydrocarbons (b1-1b), aromatic vinylic hydrocarbons (b1-1c), and the like.

Employable as the aliphatic vinylic hydrocarbons (b1-la) are alkenes and alkadienes containing 2 to 50 (preferably 2 to 22) carbon atoms and the like, including, for example, ethylene, propylene, butene, isobutylene, pentene, heptene, diisobutylene, octene, dodecene, octadecene, butadiene, isoprene, 1,4-pentadiene, and the like.

Employable as the alicyclic vinylic hydrocarbons (b1-lb) are alicyclic vinylic hydrocarbons containing 5 to 50 (preferably 5 to 22) carbon atoms and the like, including, for example, cyclohexene, (di)cyclopentadiene, pinene, limonene, indene, vinylcyclohexene, ethylidenebicycloheptene, and the like.

Employable as the aromatic vinylic hydrocarbons (b1-1c) are aromatic vinylic hydrocarbons containing 8 to 50 (preferably 8 to 22) carbon atoms and the like, including, for example, styrene, α-methylstyrene, vinyltoluene, 2,4-dimethylstyrene, ethylstyrene, isopropylstyrene, butylstyrene, phenylstyrene, and the like.

Employable as the epoxy group-containing vinyl monomers (b1-2) are epoxy group- and vinyl group-containing monomers (containing 6 to 50 (preferably 6 to 20) carbon atoms) and the like, including, for example glycidyl (meth)acrylate, and the like.

Employable as the vinyl esters (b1-3) are vinyl group- and ester bond-containing monomers (containing 4 to 50 (preferably 6 to 20) carbon atoms) and the like, including, for example, vinyl acetate, vinyl butyrate, vinyl propionate, vinyl butyrate, diallyl phthalate, diallyl adipate, isopropenyl acetate, vinyl methacrylate, vinyl methoxyacetate, vinyl benzoate, dialkyl fumarates (the two alkyl groups being straight, branched or cyclic groups containing 2 to 8 carbon atoms) and dialkyl maleates (the two alkyl groups being straight, branched or cyclic groups containing 2 to 8 carbon atoms), and the like.

Employable as the vinyl ethers (b1-4) are ether bond-and vinyl group-containing monomers (containing 3 to 50 (preferably 6 to 20) carbon atoms) and the like, including, for example, vinyl methyl ether, vinyl ethyl ether, vinyl propyl ether, vinyl butyl ether, vinyl 2-ethylhexyl ether, vinyl phenyl ether, vinyl 2-methoxyethyl ether, methoxybutadiene, vinyl 2-butoxyethyl ether, 3,4-dihydro-1,2-pyran, 2-butoxy-2'-vinyloxydiethyl ether, vinyl 2-ethylmercaptoethyl ether, etc.

Employable as the vinyl ketones (b1-5) are vinyl ketones containing 6 to 50 carbon atoms and the like, including, for example, vinyl methyl ketone, vinyl ethyl ketone, vinyl phenyl ketone, etc.

Employable as the alkyl (meth)acrylates (b1-6) are alkyl (meth)acrylates containing an alkyl group with 1 to 50 (preferably 1 to 20) carbon atoms and the like, including, for example, methyl (meth)acrylate, ethyl (meth)acrylate, propyl (meth)acrylate, butyl (meth)acrylate, 2-ethylhexyl (meth)acrylate, dodecyl (meth)acrylate, hexadecyl (meth)acrylate, heptadecyl (meth)acrylate, eicosyl (meth)acrylate, cyclohexyl methacrylate, benzyl methacrylate, phenyl (meth)acrylate, etc.

Employable as the polyoxyalkylene group-containing vinyl monomers (b1-7) are polyoxyalkylene group-containing (meth)acrylates having a weight average molecular weight (hereinafter referred to as "Mw" for short) of 100 to 10,000 (preferably 300 to 5,000) and the like, including, for example, polyethylene glycol mono(meth)acrylate (with a number average molecular weight (hereinafter referred to as "Mn" for short) of 300), polypropylene glycol (Mn 500) monoacrylate, methyl alcohol-EO (10 moles) adduct (meth)acrylate, lauryl alcohol-EO (30 moles) adduct (meth)acrylate, etc.

In the preceding and subsequent, descriptions, Mn and Mw are respectively the number average molecular weight and weight average molecular weight as determined by the gel permeation chromatography method (hereinafter referred to as "GPC method" for short) on the polystyrene equivalent basis.

Employable as the carboxyl group-containing vinyl monomers (b1-8) are carboxyl group- and vinyl group-containing monomers containing 3 to 50 (preferably 3 to 20) carbon atoms and salts thereof, and the like, including, for example, (meth)acrylic acid, maleic acid (anhydride), maleic acid monoalkyl esters (the alkyl group containing 1 to 10 carbon atoms), fumaric acid, fumaric acid monoalkyl esters (the alkyl group containing 1 to 10 carbon atoms), crotonic acid, itaconic acid, itaconic acid monoalkyl esters (the alkyl group containing 1 to 10 carbon atoms), itaconic acid glycol monoether, citraconic acid, citraconic acid monoalkyl esters (the alkyl group containing 1 to 10 carbon atoms), cinnamic acid, and alkali metal salts (e.g. sodium salts, potassium salts, etc.), alkaline earth metal salts (e.g. calcium salts, magnesium salts, etc.), amine salts or ammonium salts of these, and the like.

Employable as the sulfo group-containing vinyl monomers (b1-9) are vinylsulfuric acids, vinylsulfuric acid salts, vinylsulfuric acid esters, and the like.

Employable as the vinylsulfuric acids are vinyl group- and sulfo group-containing monomers containing 2 to 50 (preferably 2 to 20) carbon atoms and the like, including, for example, vinylsulfonic acid, (meth)allylsulfonic acid, styrenesulfonic acid, $\alpha$-methylstyrenesulfonic acid, 2-hydroxy-3-(meth)acryloxypropylsulfonic acid, 2-(meth)acryloylamino-2,2-dimethylethanesulfonic acid, 2-(meth)acryloyloxyethanesulfonic acid, 3-(meth)acryloyloxy-2-hydroxypropanesulfonic acid, 2-(meth)acrylamido-2-methylpropanesulfonic acid, 3-(meth)acrylamido-2-hydroxypropanesulfonic acid, etc.

Employable as the vinylsulfuric acid salts are salts resulting from combinations of the above-mentioned vinylsulfuric acid-derived anions and the cations enumerated above referring to (A1a), including, for example, sodium vinylsulfonate, calcium 2-(meth)acrylamido-2-methylpropanesulfonate, sodium 3-(meth)acryloyloxy-2-hydroxypropanesulfonate, etc.

Employable as the vinylsulfuric acid esters are those composed of the above-mentioned vinylsulfuric acids and alcohols containing 2 to 50 (preferably 3 to 22) carbon atoms, and the like.

Employable as the alcohols are saturated or unsaturated aliphatic alcohols (containing 3 to 22 carbon atoms), which may be primary alcohols (containing 3 to 22 carbon atoms), secondary alcohols (containing 3 to 22 carbon atoms), tertiary alcohols (containing 3 to 22 carbon atoms), and the like.

As the vinylsulfuric acid esters, there may be mentioned, for example, methyl vinylsulfonate, sulfopropyl (meth)acrylate, and the like.

Employable as the phosphono group-containing vinyl monomers (b1-10) are phosphono group- and vinyl group-containing monomers containing 4 to 50 (preferably 5 to 20) carbon atoms, including, for example, hydroxyalkyl (the hydroxyalkyl group containing 1 to 20 carbon atoms) (meth)acrylate phosphoric acid monoesters, 2-hydroxyethyl (meth)acryloyl phosphate, phenyl-2-acryloyloxyethyl phosphate, 2-acryloyloxyethanephosphonic acid, and the like.

Employable as the hydroxyl group-containing vinyl monomers (b1-11) are hydroxyl group- and vinyl group-containing monomers containing 4 to 50 (preferably 4 to 20) carbon atoms and the like, including, for example, hydroxystyrene, hydroxyethyl (meth)acrylate, hydroxypropyl (meth)acrylate, (meth)allyl alcohol, crotyl alcohol, isocrotyl alcohol, 1-buten-3-ol, 2-buten-1-ol, 2-butene-1,4-diol, propargyl alcohol, 2-hydroxyethyl propenyl ether, sucrose allyl ethers, and the like.

Employable as the nitrogen-containing vinyl monomers (b1-12) are amino group-containing vinyl monomers (b1-12a), amido group-containing vinyl monomers (bl-12b), nitrile group-containing vinyl monomers (b1-12c), quaternary ammonio group-containing vinyl monomers (b1-12d), nitro group-containing vinyl monomers (b1-12e), and the like.

Employable as the amino group-containing vinyl monomers (bl-12a) are amino group- and vinyl group-containing monomers containing 4 to 50 (preferably 5 to 20) carbon atoms, including, for example, aminoethyl (meth)acrylate, dimethylaminoethyl (meth)acrylate, diethylaminoethyl (meth)acrylate, tert-butylaminoethyl methacrylate, N-aminoethyl(meth)acrylamide, (meth)allylamine, morpholinoethyl (meth)acrylate, 4-vinylpyridine, 2-vinylpyridine, crotylamine, N,N-dimethylaminostyrene, methyl $\alpha$-acetaminoacrylate, vinylimidazole, N-vinylpyrrole, N-vinylthiopyrrolidone, N-arylphenylenediamine, aminocarbazole, aminothiazole, aminoindole, aminopyrrole, aminoimidazole, aminomercaptothiazole, and the like.

Employable as the amido group-containing vinyl monomers (b1-12b) are amido group- and vinyl group-containing monomers containing 3 to 50 (preferably 3 to 20) carbon atoms, including, for example, (meth)acrylamide, N-methyl(meth)acrylamide, N-butylacrylamide, diacetone acrylamide, N-methylol(meth)acrylamide, N,N'-methylenebis (meth) acrylamide, cinnamide, N,N-dimethylacrylamide, N,N-dibenzylacrylamide, methacrylformamide, N-methyl-N-vinylacetamide, N-vinylpyrrolidone, and the like.

Employable as the nitrile group-containing vinyl monomers (b1-12c) are nitrile group- and vinyl group-containing monomers containing 3 to 50 (preferably 3 to 20) carbon atoms, including, for example, (meth)acrylonitrile, cyanostyrene, and the like.

Employable as the quaternary ammonio group-containing vinyl monomers (b1-12d) are quaternization products derived from tertiary amino group-containing vinyl monomers containing 6 to 50 (preferably 8 to 20) carbon atoms (e.g. quaternization products obtained by using such quaternizing agents as methyl chloride, dimethyl sulfate, benzyl chloride and dimethyl carbonate). As the tertiary amino group-containing vinyl monomers, there may be mentioned, for example, trimethylaminoethyl (meth)acrylate, triethylaminoethyl (meth)acrylate, trimethylaminoethyl(meth)acrylamide, triethylaminoethyl(meth)acrylamide, tetrallylamine, and the like.

Employable as the nitro group-containing vinyl monomers (b1-12e) are nitro group- and vinyl group-containing monomers containing 6 to 50 (preferably 6 to 20) carbon atoms and the like, including, for example, nitrostyrene, dinitrostyrene, and the like.

Employable as the halogen element-containing vinyl monomers (b1-13) are halogen atom- and vinyl group-containing hydrocarbons containing 2 to 50 (preferably 2 to 20) carbon atoms and the like, including, for example, vinyl chloride, vinyl bromide, vinylidene chloride, allyl chloride, chlorostyrene, bromostyrene, dichlorostyrene, chloromethylstyrene, tetrafluorostyrene, chloroprene, and the like.

As the other vinyl monomers (b1-14), there may be mentioned acetoxystyrene, phenoxystyrene, ethyl $\alpha$-ethoxyacrylate, isocyanatoethyl (meth)acrylate, cyanoacrylates, m-isopropenyl-$\alpha,\alpha$-dimethylmethylbenzyl isocyanate, and the like.

The resins (B1) can be obtained, using a known method, by reacting (b1) with a polymerization initiator, if necessary in the presence of a solvent.

The polymerization initiator for polymerizing the above monomer(s) may be a radical polymerization initiator, a cationic polymerization initiator, or an anionic polymerization initiator.

The radical polymerization initiator may be any of those known in the art and used in polymerizing vinyl monomers. Typically, there may be mentioned peroxide polymerization initiators, azo polymerization initiators, and the like. Redox polymerization initiators in which a peroxide polymerization initiator and a reducing agent are used in combination may also be used. Further, two or more species of these may also be used in combination.

Employable as the peroxide polymerization initiators are water-soluble peroxide polymerization initiators. For example, there may be mentioned hydrogen peroxide, peracetic acid, ammonium persulfate, potassium persulfate, sodium persulfate, and the like.

As the azo polymerization initiators, there may be mentioned azobisamidinopropane salts, azobiscyanovaleric acid (salts), 2,2'-azobis[2-methyl-N-(2-hydroxyethyl)propionamide], and the like.

As the redox polymerization initiators, there may be mentioned, for example, aqueous redox type polymerization initiators in which a water-soluble peroxide (those enumerated above are employable) such as a persulfate salt, hydrogen peroxide, a hydroperoxide, etc. and a water-soluble inorganic or organic reducing agent (e.g. ferrous salt, sodium hydrogen sulfite, alcohol, polyamine, etc.), and the like.

Employable as the anionic polymerization initiators are those known in the art, for example strong alkaline substances which are salts of strontium, calcium, potassium, sodium, lithium, etc., weakly alkaline substances such as pyridine, and the like.

Employable as the cationic polymerization initiators are those known in the art, for example protonic acids such as sulfuric acid, phosphoric acid and perchloric acid, and Lewis acids such as boron trifluoride, aluminum chloride, titanium tetrachloride:and tin tetrachloride, and the like.

Preferred among these polymerization initiators are radical polymerization initiators, anionic polymerization initiators and redox polymerization initiators. Redox polymerization initiators are more preferred, and those redox polymerization initiators in which potassium persulfate and a reducing agent are used in combination are particularly preferred.

The amount of use (part(s) by weight) of the polymerization initiators is preferably not less than 0.1, more preferably not less than 0.2, particularly preferably not less than 0.3, but preferably not more than 20, more preferably not more than 10, particularly preferably not more than 5, relative to 100 parts by weight of (b1).

The polyesters (B1-2) can be obtained by the method comprising subjecting a diol (b2-2) and a dicarboxylic acid (b2-1) or an ester-forming derivative thereof (acid anhydride, acid halide, lower alkyl (containing not more than 4 carbon atoms) ester) to dehydration condensation, the method comprising subjecting a hydroxycarboxylic acid (b2-3) to dehydration condensation, the method comprising subjecting a lactone (b2-4) to ring-opening polymerization, or the like.

Employable as the dicarboxylic acids (b2-1) are dicarboxylic acids containing 4 to 20 carbon'atoms and the

EP 1 516 893 A1

like, including, for example, adipic acid, maleic acid, terephthalic acid, phthalic acid, and the like.

Employable as the diols (b2-2) are diols containing 2 to 18 carbon atoms and the like, including, for example, ethylene glycol, diethylene glycol, 2,2-dimethylpropanediol, 1,4-butanediol, 1,18-octadecanediol, bisphenol A-alkylene oxide adducts, and the like.

Employable as the hydroxycarboxylic acids (b2-3) are hydroxycarboxylic acids containing 2 to 12 carbon atoms and the like, including, for example, hydroxyacetic acid, ω-hydroxycaproic acid, ω-hydroxyenanthic acid, ω-hydroxycaprylic acid, ω-hydroxypelargonic acid, ω-hydroxycapric acid, 11-hydroxyundecanoic acid, 12-hydroxydodecanoic acid, and the like.

Employable as the lactones (b2-4) are lactones containing 6 to 12 carbon atoms and the like, including, for example, caprolactone, enantholactone, laurolactone, undecanolactone, and the like.

(B1-2) can be produced by reacting the diol (b2-2) with the dicarboxylic acid (b2-1) or an ester-forming derivative thereof (acid anhydride, acid halide, lower alkyl (containing not more than 4 carbon atoms) ester) in the manner of dehydration condensation. The mole ratio of (b2-1)/(b2-2) is preferably 1.1/1 to 1/1.1, more preferably 1.05/1 to 1/1.05.

As the esterification catalyst, there may be mentioned, for example, inorganic acids (sulfuric acid, hydrochloric acid, etc.), organic acids (p-toluenesulfonic acid, methanesulfonic acid, polyphosphate esters, etc.), antimony catalysts (antimony trioxide, etc.), tin catalysts (monobutyltin oxide, etc.), titanium catalysts (tetrabutyl titanate, etc.), zirconium catalysts (tetrabutyl zirconate, etc.), zirconium organic acid salts (zirconyl acetate), organic acid metal salt catalysts (zinc acetate, etc.), and the like.

When such a catalyst is used, the catalyst is used generally in an amount of 0.1 to 5 parts by weight per 100 parts by weight of the monomer(s) (when (b2-1) and (b2-2) are used, the total weight of them).

The polyesters (B1-2) are produced in the conventional manner, for example by reacting (b2-1) with (b2-2) in the presence of an esterification catalyst at 1 torr and 200°C for 18 hours.

The polyamides (B1-3) can be obtained by the method comprising subjecting a dicarboxylic acid (b2-1) and a diamine (b3-1) to dehydration condensation, the method comprising subjecting an aminocarboxylic acid (b3-2) to dehydration condensation, or the method comprising subjecting a lactam (b3-3) to ring-opening polymerization.

Employable as the diamines (b3-1) are diamines containing 2 to 18 carbon atoms and the like, including, for example, ethylenediamine, 1,3-propanediamine, 2,2-dimethylpropanediamine, 1,4-butanediamine, isophoronediamine, 1,18-octadecanediamine, phenylenediamine, and the like.

Employable as the aminocarboxylic acids (b3-2) are aminocarboxylic acids containing 2 to 12 carbon atoms and the like, including, for example, glycine, ω-aminocaproic acid, ω-aminoenathic acid, ω-aminocaprylic acid, ω-aminopelargonic acid, ω-aminocapric acid, 11-aminoundecanoic acid, 12-aminododecanoic acid, and the like.

Employable as the lactam (b3-3) are lactams containing 6 to 12 carbon atoms and the like, including, for example, caprolactam, enantholactam, laurolactam, undecanolactam, and the like.

When (b2-1) and (b3-1) are subjected to dehydration condensation to give (B1-3), the mole ratio of (b2-1)/(b3-1) is preferably 1.1/1 to 1/1.1, more preferably 1.05/1 to 1/1.05.

The polyamides (B1-3) can be produced in the conventional manner, for example by reacting (b2-1) with (b3-1) at 1 torr and 200°C for 12 hours.

The polyurethanes (B1-4) can be obtained by subjecting a diisocyanate (b4-1) and a diol (b2-2) to polyaddition reaction.

Employable as the diisocyanates (b4-1) are diisocyanates containing 6 to 20 carbon atoms (excluding the isocyanato group carbon atoms; hereinafter the same shall apply) and the like, including, for example, hexamethylene diisocyanate (HDI), dodecamethylene diisocyanate, 1,3- or 1,4-phenylene diisocyanate, 2,4- or 2,6-tolylene diisocyanate (TDI), 2,4'- or 4,4'-diphenylmethanediisocyanate (MDI), isophoronediisocyanate (IPDI), dicyclohexylmethane-4,4'-diisocyanate (hydrogenated MDI), methylcyclohexylene diisocyanate (hydrogenated TDI), 2,5- or 2,6-norbornenediisocyanate, m- or p-xylylene diisocyanate (XDI), α,α,α',α'-tetramethylxylylene diisocyanate (TMXDI), and the like.

When (b4-1) is reacted with (b2-2) to give (B1-4), the mole ratio of (b4-1)/(b2-2) is preferably 1.1/1 to 1/1.1, more preferably 1.05/1 to 1/1.05.

Employable as the urethane formation catalyst are those known in the art, including metal catalysts such as tin-based catalysts and lead-based catalysts; amine catalysts such as triethylenediamine, tetramethylethylenediamine, N-ethylmorpholine, triethylamine, diethylethanolamine, carbonates or organic acid salts of these, and the like.

When such a catalyst is used, the amount of use of the catalyst is generally 0.1 to 5 parts by weight per 100 parts by weight of the monomers (total weight of (b4-1) and (b2-2)).

The polyurethanes (B1-4) are produced in the conventional manner, for example, by reacting (b4-1) with (b2-2) at 60°C in a nitrogen atmosphere in the presence of a urethane formation catalyst.

The polycarbonates (B1-5) can be obtained by subjecting the diol (b2-2) and phosgene or a carbonate diester to condensation.

When the diol (b2-2) is subjected to condensation with phosgene or a carbonate diester to give (B1-5), the

**EP 1 516 893 A1**

mole ratio of (b2-2)/phosgene or the carbonate diester is preferably 1.1/1 to 1/1.1, more preferably 1.05/1 to 1/1.05.

The polycarbonates (B1-5) are produced in the conventional manner, for example, by reacting (b2-2) with phosgene at 1 torr and 120°C.

The thermoplastic resins (B1) preferably have an Mn of not lower than 10,000, more preferably not lower than 20,000, still more preferably not lower than 30,000, particularly preferably not lower than 40,000, but preferably not higher than 1,000,000, more preferably not higher than 500,000, still more preferably not higher than 400,000, particularly preferably not higher than 300,000.

Employable as the thermosetting resins (B2) are crosslinked/cured products (B2-1) derived from thermosetting resins (B1a) obtainable by introducing a crosslinking reactive group into thermoplastic resins (B1), crosslinked resins (B2-2) derived from a constituent monomer of the thermoplastic resins (B1) and a crosslinking monomer, epoxy resins (B2-3), phenol resins (B2-4), furan resins (B2-5), and the like.

The crosslinked/cured products (B2-1) can be obtained by subjecting a thermosetting resin (B1a) obtained by introducing a crosslinking reactive group into a thermoplastic resin (B1) to epoxide, urethane and/or urea formation reaction, if necessary in the presence of a curing agent, catalyst and/or solvent.

As the crosslinking reactive group, there may be mentioned an epoxy, hydroxyl, carboxyl, amino, isocyanato group, and the like.

As the method of obtaining (B1a), there may be mentioned a method of (co)polymerizing a crosslinking reactive group-containing vinyl monomer in polymerizing the vinyl monomer (b1), and the like.

As the crosslinking reactive group-containing vinyl monomer, there may be mentioned (b1-2), (b1-7), (b1-8), (b1-11), (b1-12), and the like.

The amount of use (part(s) by weight) of the crosslinking reactive group-containing vinyl monomer to be used in synthesizing (B1a) is preferably not lower than 5, more preferably not lower than 10, particularly preferably not lower than 15, but preferably not higher than 100, more preferably not higher than 70, particularly preferably not higher than 50, per 100 parts by weight of (B1a).

As the curing agent, there may be mentioned diols, diamines, diisocyanates, diepoxides, and the like.

When such a curing agent is used, the amount of use (part(s) by weight) of the curing agent is preferably not lower than 0.1, more preferably not lower than 1, particularly preferably not lower than 5, but preferably not higher than 50, more preferably not higher than 30, particularly preferably not higher than 25, per 100 parts by weight of (B1a).

On the occasion of the urethane formation reaction and urea formation reaction, a urethane formation catalyst may be used according to need. Employable as the urethane formation catalyst are those mentioned hereinabove.

When a catalyst is used, the amount of use of the catalyst is generally 0.1 to 5 parts by weight per 100 parts by weight of the resin.

The crosslinked resins (B2-2) can be obtained by using a crosslinking monomer in lieu of a part of the constituent monomer(s) of the thermoplastic resins (B1) and polymerizing the resulting monomer composition.

Employable as the crosslinking monomer are polyfunctional vinyl monomers containing 2 to 8 or more nonconjugated double bonds; highly functional carboxylic acids, highly functional alcohols, highly-functional amines and highly functional isocyanates, each having 3 to 8 or more functional groups, and the like.

Employable as the polyfunctional vinyl monomers are polyhydric alcohol {containing 2 to 50 (preferably 2 to 20) carbon atoms; di- to octahydric (preferably di- to tetrahydric)} poly(meth)acrylates and aromatic polyfunctional vinyl compounds, and the like. For example, there may be mentioned ethylene glycol di(meth)acrylate, propylene glycol di(meth)acrylate, neopentyl glycol di(meth)acrylate, trimethylolpropane tri(meth)acrylate and polyethylene glycol di(meth)acrylate; divinylbenzene, divinyltoluene, divinylxylene, divinylketone, trivinylbenzene, and the like.

The amount of use (part(s) by weight) of the polyfunctional vinyl monomers is preferably not lower than 0.1, more preferably not lower than 1, particularly preferably not lower than 5, but preferably not higher than 50, more preferably not higher than 30, particularly preferably not higher than 25, relative to 100 parts by weight of the total weight of the vinyl monomer (b1) and polyfunctional vinyl monomer.

Employable as the highly functional carboxylic acids are polyfunctional (tribasic to pentabasic) carboxylic acids containing 4 to 50 carbon atoms and the like, including, for example, trimellitic acid, 1,2,4,5-benzenetetracarboxylic acid, benzenehexacarboxylic acid, naphthalenetetracarboxylic acid, and the like.

The amount of use (part(s) by weight) of the highly functional carboxylic acid is preferably not lower than 0.1, more preferably not lower than 1, particularly preferably not lower than 5, but preferably not higher than 50, more preferably not higher than 30, particularly preferably not higher than 25, per 100 parts by weight of the total weight of the dicarboxylic acid (b2-1), hydroxycarboxylic acid (b2-3), lactone (b2-4) and highly functional carboxylic acid.

Employable as the highly functional alcohol are polyfunctional (tri- to pentahydric) alcohols containing 3 to 50 carbon atoms and the like, including, for example, glycerol, diglycerol, trimethylolpropane, pentaerythritol, dipentaerythritol, and the like.

The amount of use (part(s) by weight) of the highly functional alcohol is preferably not lower than 0.1, more preferably not lower than 1, particularly preferably not lower than 5, but preferably not higher than 50, more preferably not higher than 30, particularly preferably not higher than 25, per 100 parts by weight of the total weight of the diol (b2-2), hydroxycarboxylic acid (b2-3), lactone (b2-4) and highly functional alcohol.

Employable as the highly functional amines are polyfunctional (tri- to pentafunctional) amines containing 3 to 50 carbon atoms and the like, including, for example, diethylenetriamine, bis(hexamethylene)triamine, triethylenetetramine, tetraethylenepentamine, pentaethylenehexamine, and the like.

The amount of use (part(s) by weight) of the highly functional amine is preferably not lower than 0.1, more preferably not lower than 1, particularly preferably not lower than 5, but preferably not higher than 50, more preferably not higher than 30, particularly preferably not higher than 25, per 100 parts by weight of the total weight of the diamine (b3-1), aminocarboxylic acid (b3-2), lactam (b3-3) and highly functional amine.

Employable as the highly functional isocyanates are polyfunctional (tri- to hexafunctional) isocyanates containing 3 to 60 carbon atoms and the like, including, for example, HDI trimer, IPDI trimer, TDI trimer, 2-isocyanatoethyl-2,6-diisocyanatocaproate, glycerol-HDI (3 moles) adduct, pentaerythritol-HDI (4 moles) adduct, dipentaerythritol-HDI (6 moles) adduct, and the like.

The amount of use (part(s) by weight) of the highly functional isocyanates is preferably not lower than 0.1, more preferably not lower than 1, particularly preferably not lower than 5, but preferably not higher than 50, more preferably not higher than 30, particularly preferably not higher than 25, per 100 parts by weight of the total weight of the diisocyanate (b4-1) and highly functional isocyanate.

The crosslinked resins (B2-2) are produced in the conventional manner, for example by the same method as the method of producing the thermoplastic resins (B1).

When the crosslinked resin (B2-2) is a polyester, it is desirable that the amounts of use of the dicarboxylic acid, highly functional carboxylic acid, diol, highly functional alcohol, hydroxycarboxylic acid and lactone be selected so that the ratio between the number of moles of the carboxyl group and the number of moles of the hydroxyl group may fall within the range of 1.1/1 to 1/1.1 (preferably 1.05/1 to 1/1.05).

When the crosslinked resin (B2-2) is a polyamide, it is desirable that the amounts of use of the dicarboxylic acid, highly functional carboxylic acid, diamine, highly functional amine, aminocarboxylic acid and lactam be selected so that the ratio between the number of moles of the carboxyl group and the number of moles of the amino group may fall within the range of 1.1/1 to 1/1.1 (preferably 1.05/1 to 1/1.05).

When the crosslinked resin (B2-2) is a polyurethane, it is desirable that the amounts of use of the diisocyanate, highly functional isocyanate, diol and highly functional alcohol be selected so that the ratio between the number of moles of the isocyanato group and the number of moles of the hydroxyl group may fall within the range of 1.1/1 to 1/1.1 (preferably 1.05/1 to 1/1.05).

The epoxy resins (B2-3) can be obtained by reacting a polyepoxide with a polyamine and/or polycarboxylic acid (or acid anhydride), and the like.

On that occasion, the number of functional groups of at least one of the polyepoxide, polyamine and polycarboxylic acid should be three or more so that the epoxy resins (B2-3) may be rendered thermosetting. Further, a monofunctional epoxide, monofunctional amine or monofunctional carboxylic acid may also be used so long as the physical properties will not be impaired thereby.

Employable as the epoxide having one functional group are epoxides containing 2 to 50 carbon atoms and the like, including, for example, EO, PO, styrene oxide, phenyl glycidyl ether, allyl glycidyl ether, and the like.

Employable as the polyepoxide having two functional groups are polyepoxides containing 4 to 50 carbon atoms and the like, including, for example, ethylene glycol diglycidyl ether, 1,4-epoxycyclohexane, bisphenol A diglycidyl ether, and the like.

Employable as the polyepoxide having 3 to 6 functional groups are polyepoxides containing 6 to 50 carbon atoms and the like, including, for example, glycerol triglycidyl ether, pentaerythritol tetraglycidyl ether, dipentaerythritol hexaglycidyl ether, and the like.

The polyepoxides may be used singly or a mixture thereof may be used.

Employable as the polyamine are diamines (b3-1), highly functional amines, and the like. The polyamines may be used singly or a mixture thereof may also be used.

The amount of use (part(s) by weight) of the polyamines is preferably not lower than 20, more preferably not lower than 25, particularly preferably not lower than 30, but preferably not higher than 100, more preferably not higher than 60, particularly preferably not higher than 50, per 100 parts by weight of the epoxide.

Employable as the polycarboxylic acids are dicarboxylic acids (b2-1), highly functional carboxylic acids, and the like. The polycarboxylic acids may be used singly or a mixture thereof may also be used.

The amount of use (part(s) by weight) of the polycarboxylic acids is preferably not lower than 50, more preferably not lower than 50, particularly preferably not lower than 60, but preferably not higher than 150, more preferably not higher than 100, particularly preferably not higher than 90, per 100 parts by weight of the epoxide.

Employable as the phenol resins (B2-4) are resol resins, novolak resins, and the like. They are obtained by reacting phenol with formaldehyde.

The resol resins are obtained by reacting phenol with an equimolar amount or an excess of formaldehyde in the presence of a base catalyst such as sodium hydroxide, ammonia or an organic amine.

The phenol/formaldehyde mole ratio is preferably 1/1 to 1/2, more preferably 1/1 to 1/1.9.

The amount of use (part(s) by weight) of the base catalyst is preferably not lower than 0.5, more preferably not lower than 0.7, particularly preferably not lower than 1, but preferably not higher than 20, more preferably not higher than 15, particularly preferably not higher than 10, per 100 parts by weight of the total weight of phenol and formaldehyde.

The novolak resins are obtained by reacting formaldehyde with an equimolar amount or an excess of phenol in the presence of an acid catalyst such as oxalic acid.

The phenol/formaldehyde mole ratio is preferably 1/1 to 1/0.7, more preferably 1/0.9 to 1/0.75.

The amount of use (part(s) by weight) of the acid catalyst is preferably not lower than 0.5, more preferably not lower than 0.7, particularly preferably not lower than 1, but preferably not higher than 20, more preferably not higher than 15, particularly preferably not higher than 10, per 100 parts by weight of the total weight of phenol and formaldehyde.

The furan resins (B2-5) can be obtained by reacting furan and/or a derivative thereof with formaldehyde.

The furan and/or furan derivative/formaldehyde mole ratio is preferably 1/0.7 to 1/2, more preferably 1/0.7 to 1/0.9 and 1/1.1 to 1/1.9.

Those compounds produced by using melamine, urea or the like in lieu of a part of the furan and/or derivative thereof, and the like may also be used as alternative furan resins.

When melamine, urea or the like is used as a substitute for furan, the amount of use thereof is preferably not lower than 0.1, more preferably not lower than 1, particularly preferably not lower than 5, but preferably not higher than 50, more preferably not higher than 30, particularly preferably not higher than 25, per 100 parts by weight of furan.

As other thermosetting resins, there may be mentioned, those thermosetting resins known in the art, for example, xylene resins, petroleum resins, urea resins, melamine resins, alkyd resins, silicone resins, and the like.

Among those organic polymers (B), thermosetting resins (B2) are preferred. More preferred are crosslinked/cured products (B2-1) of thermosetting resins (B1a) obtained by introducing a crosslinking reactive group into thermoplastic resins (B1); crosslinked resins (B2-2) derived from the thermoplastic resin (B1)-constituting monomer(s) and a crosslinking monomer; phenol resins (B2-4) and furan resins (B2-5). Still more preferred are (B2-4) and (B2-5). The resins (B2-4) are most preferred.

The organic polymers (B) may be used singly or two or more of them may be used in combination.

In the micelle-containing organic polymers of the invention, there may optionally be added resin additives (E) according to the various intended uses thereof unless the characteristics of the polymers are not impaired.

As the resin additives (E), there may be mentioned pigments, dyes, fillers (organic and/or inorganic fillers), nucleating agents, glass fibers, lubricants, plasticizers, mold release agents, antioxidants, flame retardants, ultraviolet absorbers, antimicrobial agents, and the like.

When the resin additives (E) are added, the amount of use (part(s) by weight) of (E) is preferably not lower than 0.1, more preferably not lower than 0.2, still more preferably not lower than 0.3, most preferably not lower than 0.4, but preferably not higher than 30, more preferably not higher than 20, still more preferably not higher than 10, most preferably not higher than 5, per 100 parts by weight of (B).

The method of producing micelle-containing organic polymers is not particularly restricted but includes, for example, the following:

(1) The method comprising blending an organic polymer (B)-constituting monomer(s) with the surfactant (A), if necessary together with a solvent and/or the resin additive (E), forming surfactant micelles in the constituent monomer(s), polymerizing the constituent monomer(s) and curing the polymer, if necessary followed by removal of the solvent, to give a micelle-containing organic polymer;

(2) The method comprising dissolving a prepolymer in a solvent, adding (A), if necessary together with (E), forming micelles of (A) in the prepolymer, polymerizing the prepolymer and curing the polymer, followed by removal of the solvent, to give a micelle-containing organic polymer; and

(3) The method comprising dissolving an organic polymer (B) in a solvent, adding (A), if necessary together with a solvent and/or (E), forming micelles of (A) in (B), and removing the solvent if necessary, to give a micelle-containing organic polymer.

The term "prepolymer" as used herein refers to a crosslinking reactive group-containing organic polymer (B) with a Mn of 1,000 to 100,000.

The solvent to be used in producing micelle-containing organic polymers is not particularly restricted but includes, for example, water; hydrocarbons containing 1 to 12 carbon atoms such as pentane, hexane, cyclohexane, toluene, xylene and mesitylene; alcohols containing 1 to 10 carbon atoms such as methanol, ethanol, isopropanol, 1-butanol, ethylene glycol and glycerol; esters containing 2 to 12 carbon atoms such as ethyl acetate and butyl acetate; ketones containing 3 to 12 carbon atoms such as acetone and methyl ethyl ketone; ethers containing 2 to 12 carbon atoms such as' diethyl ether and butyl ethyl ether; amides containing 2 to 12 carbon atoms such as N,N-dimethylformamide and N-diethylacetamide; sulfoxides containing 2 to 12 carbon atoms such as dimethyl sulfoxide and diethyl sulfoxide; and the like.

Among those, water, hydrocarbons, alcohols, esters and ketones are preferred, and water, toluene, xylene, mesitylene, methanol, ethanol, isopropanol, 1-butanol, ethyl acetate and acetone are more preferred.

In cases where a solvent is used in producing the micelle-containing organic polymer, the amount of use (part (s) by weight) of the solvent is not particularly restricted but preferably not lower than 1, more preferably not lower than 5, still more preferably not lower than 10, most preferably not lower than 15, but preferably not higher than 100, more preferably not higher than 50, still more preferably not higher than 40, most preferably not higher than 30, per part by weight of the surfactant (A).

The micelle-containing organic polymer of the invention can be processed into various forms. For example, it can be made into such forms as lumps, fibers, sheets or films by injection molding, extrusion molding, or the like.

On the occasion of molding, the molding temperature may be a temperature at which the organic polymer can be molded. Preferably, however, it is not higher than 200°C, more preferably not higher than 150°C.

The micelle-containing organic polymer of the invention can be used as a starting material for the manufacture of the organic polymer porous material and porous carbon material which are to be described below and, in addition, in the form of ink-accepting layers (particularly effective when a cationic surfactant is used), and the like.

Now, the organic polymer porous material in accordance with the second aspect of the invention is described.

In the organic polymer porous material of the invention, the total volume of pores having diameters within the range of ±40% of the pore diameter showing a maximum peak in a pore diameter distribution curve is not smaller than 50% by volume, preferably not smaller than 60% by volume, more preferably not smaller than 70% by volume, still more preferably not smaller than 75% by volume, most preferably not smaller than 80% by volume, based on the whole pore volume.

The term "pore diameter distribution curve" as used herein means a curve obtained by plotting the differential coefficient (dV/dD), where V is the pore volume and D is the pore diameter, along the ordinate and the pore diameter (D) along the abscissa.

The "pore diameter showing a maximum peak" means the pore diameter at which the dV/dD value on the pore diameter distribution curve is maximum.

The pore diameter distribution curve is calculated from an adsorption isothermal line obtained by argon or nitrogen gas adsorption measurements. It can also be determined from a pore distribution curve obtained by mercury injection method.

Pore diameters of 0.3 nm to 50 nm and the corresponding pore volumes can be determined from the adsorption isothermal line, and pore diameters of 10 nm to 1,000 nm and the corresponding pore volumes can be determined from the mercury injection method. Generally, the adsorption isothermal line is used for pores of 50 nm or smaller, and pores of 50 nm or larger are measured by mercury injection method. By using both methods, pore diameters within the whole preferred range can be measured.

A method of calculating from an adsorption isothermal line is described below as an example.

The measurement sample is cooled to the liquefied nitrogen temperature (-196°C), nitrogen gas is then introduced, and the amount of the gas adsorbed is determined by the constant volume method or gravimetric method. The pressure of the nitrogen gas introduced is gradually increased, and the amount of nitrogen gas adsorbed is plotted against each equilibrium pressure to form an adsorption isothermal line.

The desired pore diameter distribution curve is determined from this adsorption isothermal line according to the calculation formula of the Cranston-Inklay method (e.g. Adv. Catalysis, vol. 9, page 143, published in 1957) or the BJH method (J. Catalysis, vol. 4, page 649, published in 1965), and the like.

Mercury injection method is a measurement method based on the principle that mercury shows no capillary phenomenon unless an external pressure is applied thereto. A porous sample is immersed in mercury, and the external pressure is applied, whereupon mercury penetrates into the sample inside. On that occasion, there is the following relation (3) between the external pressure applied and the diameter of the minimum pores into which mercury can penetrate:

$$D = -4\gamma\cos\theta/P \qquad\qquad (3)$$

(in the formula, D is the pore diameter (cm), $\gamma$ is the surface tension of mercury (480 dyne/cm), $\theta$ is the contact angle (140°), and P is the measurement pressure (kg/cm$^2$)).

The total volume of pores having a pore diameter (D) corresponding to the pressure applied or a larger diameter is determined from the amount of mercury that has penetrated:

The results thus obtained are plotted, the pore volumes along the ordinate and the pore diameter along the abscissa. The curve obtained is differentiated to give a curve which serves as the pore distribution curve.

The details of mercury injection method are described in J. Amer. Inst. Chem. Engrs., vol. 2, page 307, published in 1956.

The organic polymer porous material of the present invention has a structure such that a large number of pores are formed in an organic polymer. As the shape of the pores in the organic polymer porous material of the invention, there may be mentioned basket-like, one-dimensional tunnel-like, three-dimensional tunnel-like ones, and the like.

The arrangement of the pores in the organic polymer porous material of the invention may have regularity or no regularity. Preferably, it has regularity, though.

The organic polymer porous material of the invention has at least one peak in its X-ray diffraction pattern, and at least one pair of the diffraction angle (2θ) and the lattice spacing (d) of said peak substantially satisfies the relation (1) given below and d preferably has at least one value within the range of not less than 0.8 nm to not more than 150 nm. Namely, while there may exist one or more pairs of 2θ and d which satisfy the relation, the existence of only one pair in which d is 0.8 to 150 nm is enough.

$$2\theta = 2\sin^{-1}(\lambda/2d) \tag{1}$$

(in the formula, λ represents the wavelength (nm) of the characteristic X-ray Kα1.)

The lattice spacing (d) (nm) is preferably not smaller than 0.8, more preferably not smaller than 1, particularly preferably not smaller than 2, but preferably not larger than 150, more preferably not larger than 100, particularly preferably not larger than 50.

The arrangement of the pores of the organic polymer porous material of the invention which satisfies the above conditions may have regularity or no regularity. Preferably, it has regularity, though.

That the arrangement of pores has regularity means that the structure of arranged pores shows symmetry as represented by one of the space groups.

As such space group, there may be mentioned, for example, the same ones as mentioned hereinabove referring to the micelle-containing organic polymer.

Furthermore, the pore diameter (nm) showing a maximum peak in the pore diameter distribution curve for the organic polymer porous material of the invention is preferably not smaller than 0.3, more preferably not smaller than 0.4, still more preferably not smaller than 0.5, most preferably not smaller than 1, but preferably not larger than 100, more preferably not larger than 50, still more preferably not larger than 40, most preferably not larger than 30.

If this pore diameter (nm) showing a maximum peak is below the above range, the organic polymer porous material of the invention, when used as ink jet-accepting layers, catalyst supports or the like, for example, may hardly allow the ink, ions, molecules or the like, to penetrate into the pores in some cases. Moreover, if the diameter exceeds the above range, decreases in surface area, in adsorption ability and/or in electric characteristics may result when the material is used in the above-mentioned fields of application.

The method of producing the organic polymer porous material of the invention is not particularly restricted, but the material can be obtained, for example, by removing the surfactant (A) from the micelle-containing organic polymer.

As the method of removing the surfactant (A) from the micelle-containing organic polymer, there may be mentioned the method based on baking, the method comprising treatment with an extracting solvent, and the like method.

According to the baking-based method, the micelle-containing organic polymer is heated to a certain temperature level to thereby decompose and remove the surfactant to give an organic polymer porous material.

The atmosphere in the step of decomposition by heating may be inert gas such as neon, argon, nitrogen or carbon dioxide, air, or a mixture of these. Among them, air is preferred. Further, the heating/decomposition apparatus to be used is preferably equipped with an inflowing gas inlet and an effluent gas outlet so that the decomposition products may be removed. As such apparatus, there may be mentioned an electric oven through which gases can be passed, and the like.

When the surfactant is removed by the above method, it is necessary to pay attention to the softening point of the resin. When the organic polymer is a thermoplastic resin, for example, heating to a temperature at or above the softening point may possibly result in disappearance, due to softening, of the pores previously formed.

According to the method comprising treatment with an extracting solvent, the surfactant (A) in the micelle-containing organic polymer is extracted and removed by solvent extraction, whereby an organic polymer porous material can be obtained.

Preferably used as the extracting solvent are those having high solubility to the surfactant and as low as possible affinity with the resin. If the affinity with the resin is high, the resin may possibly be dissolved in the extracting solvent and the pores previously formed may disappear.

As such extracting solvent, there may be mentioned, for example, water, hydrophilic solvents such as methanol, ethanol and acetone, and mixed solvents composed of these (e.g. 50% by volume of aqueous ethanol solution, 80% by volume of aqueous methanol solution, 40% by volume of aqueous acetone solution, etc.); and lipophilic solvents such as pentane, hexane, heptane, toluene and xylene, and the like.

The amount of use (part(s) by weight) of the extracting solvent is preferably not lower than 10, more preferably not lower than 15, still more preferably not lower than 20, most preferably not lower than 30, but preferably not higher than 200, more preferably not higher than 150, still more preferably not higher than 120, most preferably not higher than 100, per part by weight of the micelle-containing organic polymer.

In cases where a cationic surfactant is used, the addition of a strong acid (e.g. hydrochloric acid) to the extracting solvent may sometimes facilitate the extraction because of ion exchange between the cation of the cationic surfactant and the proton. When an anionic surfactant is used, the addition of a strong base (e.g. potassium hydroxide) to the extracting solvent may sometimes facilitate the extraction.

The amount of addition of the acid or base per mole of the surfactant is preferably not lower than 1 mole, more preferably not lower than 2 moles, particularly preferably not lower than 5 moles, but preferably not higher than 100 moles, more preferably not higher than 80 moles, particularly preferably not higher than 50 moles.

In the case of treating the micelle-containing organic polymer with a solvent, the extracting solvent, optionally containing an acid or base added according to need, is maintained at a predetermined extracting temperature, the micelle-containing organic polymer is added thereto, and one or more of the following (1) to (4) are carried out according to need, viz. (1) extraction with ultrasonic irradiation, (2) extraction by repeating pressurization-return to normal pressure, (3) extraction by repeating depressurization-return to normal pressure, (4) extraction by repeating pressurization-depressurization, and the like.

After completion of the extraction, the polymer is washed with a small amount of the extracting solvent once to five times and dried (under reduced pressure) to remove the adhering extracting solvent to give an organic polymer porous material. For omitting the drying step, the extracting solvent may be replaced with another low-boiling solvent which can be used on the occasion of application of the organic polymer porous material.

In carrying out the drying under reduced pressure, the pressure is preferably reduced to 1 to 100 torr, more preferably 1 to 75 torr, particularly preferably 1 to 50 torr.

The duration of drying (hours) is preferably 1 to 24, more preferably 1 to 18, particularly preferably 1 to 12.

The organic polymer porous material of the invention can be used as a raw material for the manufacture of the porous carbon material to be described below and, further, as ink jet-accepting layers, supports for electrode substances in electric double layer capacitors, catalyst supports, separation membranes for medical use, adsorbents for clean water or waste water treatment, column packing materials for GPC, and the like.

The porous carbon material according to the third aspect of the invention is now described.

In the porous carbon material of the invention, the total volume of pores having diameters within the range of ±40% of the pore diameter showing a maximum peak in a pore diameter distribution curve based on the whole pore volume is not smaller than 50, preferably not smaller than 60, more preferably not smaller than 70, still more preferably not smaller than 75, most preferably not smaller than 80.

The porous carbon material of the invention has a structure such that a large number of pores are formed in carbon. The shape of the pores in the porous carbon material of the invention includes basket-like, one-dimensional tunnel-like, three-dimensional tunnel-like shapes, and the like.

The arrangement of the pores in the porous carbon material of the invention may have regularity or no regularity. Preferably, it has regularity, though.

Like the micelle-containing organic polymer and organic polymer porous material of the invention, the porous carbon material of the invention preferably has at least one peak in its X-ray diffraction pattern, and at least one pair of the diffraction angle (2θ) and the lattice spacing (d) of said peak substantially satisfies the relation (1) given below and d preferably has at least one value within the range of not less than0.8 nm to not more than 150 nm.

$$2\theta = 2\sin^{-1}(\lambda/2d) \qquad\qquad (1)$$

(in the formula, λ represents the wavelength (nm) of the characteristic X-ray Kα1.)

The lattice spacing (d) (nm) is preferably not smaller than 0.8, more preferably not smaller than 1, particularly preferably not smaller than 2, but preferably not larger than 150, more preferably not larger than 100, particularly preferably not larger than 50.

The arrangement of the pores of the porous carbon material of the invention which satisfies the above conditions may also have regularity or no regularity. Preferably, it has regularity, though. That the arrangement of pores has regularity means that the structure of arranged pores shows symmetry as represented by one of the space groups. As such space group, there may be mentioned, for example, the same ones as mentioned hereinabove referring to the micelle-containing organic polymer.

Furthermore, the pore diameter (nm) showing a maximum peak in the pore diameter distribution curve for the porous carbon material of the invention is also preferably not smaller than 0.3, more preferably not smaller than 0.4, particularly preferably not smaller than 0.5, but preferably not larger than 100, more preferably not larger than 50, particularly preferably not larger than 30.

If this pore diameter (nm) showing a maximum peak is below the above range, the porous carbon material of the invention, when used as electric double layer capacitor electrode materials, catalyst supports or the like, for example, may hardly allow ions, molecules or the like, to penetrate into the pores in some cases. Moreover, if the diameter exceeds the above range, decreases in surface area, in adsorption ability and/or in electric characteristics may result when the material is used in the above-mentioned fields of application.

The method of producing the porous carbon material is not particularly restricted but the material can be obtained, for example, by baking the micelle-containing organic polymer directly for carbonization or by baking the organic polymer porous material for carbonization.

The baking for carbonization is preferably carried out in an atmosphere of an inert gas such as nitrogen, helium, neon, argon, carbon dioxide, or a mixed gas composed of these, and the like gas.

Preferably, aging (preheating) is carried out prior to the baking for carbonization.

The atmosphere in the step of aging may be an inert gas such as neon, argon, nitrogen or carbon dioxide, air, or a mixture of these. Among them, air is preferred.

When the organic polymer is a thermoplastic resin, partial oxidation of the organic polymer surface by aging can prevent disappearance, deformation, etc. of pores at the baking/carbonization temperature above the softening point of the resin. In this case, the partial oxidation of the organic polymer surface is preferably carried out by raising the temperature at a stroke to an amount of the softening point + 100°C or higher in an oxygen-containing atmosphere at a heating rate of 30°C/minute or higher.

Further, a heating/decomposing apparatus equipped with an inflowing gas inlet and an effluent gas outlet so that the decomposition products may be removed is preferably used on the occasion of baking/carbonization and aging. Employable as such apparatus are carbonization ovens, electric ovens, and the like. Thus, for example, there may be mentioned carbonization ovens such as rotary kiln ovens, multistage agitated moving bed ovens and multistage fluidized bed ovens, other special carbonization ovens, and electric ovens through which gases can be passed, and the like.

The organic polymer porous material and porous carbon material derived from the micelle-containing organic polymer can retain the shape of the micelle-containing organic polymer and, therefore, a desired shape can be given to the organic polymer porous material and porous carbon material by molding the micelle-containing organic polymer in advance into the desired shape. Thus, for example, the micelle-containing organic polymer in the form of a powder, film, sheet or fiber can give an organic polymer porous material or porous carbon material in the corresponding form.

Thus, the organic polymer porous material and porous carbon material obtained may be various in forms, have uniform pore diameters, and regular pore shape and/or pore arrangement. Furthermore, the porous carbon material obtained by baking the micelle-containing organic polymer or organic polymer porous material does not require the use of such a hazardous agent as hydrofluoric acid.

The organic polymer porous material and porous carbon material of the invention exhibit excellent performance characteristics such as electric insulation, heat insulation, separability and adsorption ability.

Therefore, the porous carbon material is best suited for use as various electrochemical cell electrodes, electric double layer condenser electrodes, capacitor electrodes and other electrode materials; canister adsorbents, adsorbents for clean water or waste water treatment, adsorbents for water filters or deodorizers, adsorbents for food purification, gas adsorbents and other adsorbent materials; semiconductor insulating materials, solid electrolytes and other electronic parts materials, separation membranes for medical use, catalyst supports, and the like.

BRIEF DESCRIPTION OF THE DRAWINGS

Fig. 1 is a schematic sectional perspective view of the state in which micelles or pores and an organic polymer, or pores and carbon form the space group "2-d hexagonal p6mm".

Fig. 2 is a schematic sectional perspective view of the state in which micelles or pores and an organic polymer, or pores and carbon form the space group "cubic Ia3d".

Fig. 3 is a schematic sectional perspective view of the state in which micelles or pores and an organic polymer, or pores and carbon form the space group "cubic Pm3n".

Fig. 4 is a schematic sectional perspective view of the state in which micelles or pores and an organic polymer, or pores and carbon form the space group "3-d hexagonal $P6_3/mmc$".

BEST MODE FOR CARRYING OUT THE INVENTION

The following examples illustrate the present invention in further detail. They are, however, by no means limitative of the scope of the invention. In the following, "part(s)" means "part(s) by weight", and "%" means "% by weight".

<Example 1>

A stainless steel autoclave was charged with 10 parts of phenol, 16 parts of 36% formalin, and 1.5 parts of 10% sodium hydroxide, and the mixture was stirred until it became homogeneous. After the atmosphere inside the autoclave was substituted with nitrogen gas, the mixture was stirred at 75°C at ordinary pressure in a tightly closed condition for 3 hours to give a prepolymer. Then, 7 parts of octyltrimethylammonium chloride, 1.8 parts of 85% lactic acid and 1.5 parts of glycerol were added, and the whole was stirred until it became homogeneous. Thereafter, water and unreacted monomers were removed under reduced pressure. The thus-obtained viscous resin was placed in a mold and molded into a sheet (4 cm x 5 cm, thickness 1 mm), which was then cured at 70°C for 120 hours to give a micelle-containing organic polymer (G1) in the form of a sheet.

The micelle-containing organic polymer (G1) was subjected to X-ray diffractometry under the conditions given below, and the diffraction angle (°) of the maximum peak detected was determined. The result is shown in Table 2.

X-ray diffractometry conditions: Measurements were carried out using a RINT 2200 powder X-ray diffractometer (product of Rigaku Corporation) under the conditions: Cu-K$\alpha_1$ ($\lambda$ = 0.154056 nm), tube voltage 40.0 kV, tube current 30 mA, divergent slit 1/2°, scattering slit 1/2°, and photodetection 0.15 mm.

(G1) was pretreated, namely dried at 25°C and 1 torr for 2 hours, and used as a measurement specimen.

<Example 2>

A micelle-containing organic polymer (G2) was obtained in the same manner as in Example 1 except that 7 parts of cetyltrimethylammonium chloride was used in lieu of octyltrimethylammonium chloride.

For this micelle-containing organic polymer (G2), the diffraction angle (°) of the maximum peak was determined in the same manner as in Example 1. The result is shown in Table 2.

<Example 3>

A sheet-form micelle-containing organic polymer (G3) was obtained in the same manner as in Example 1 except that 7 parts of $EO_{20}PO_{70}EO_{20}$ (Pluronic P123; product of BASF) was used in lieu of octyltrimethylammonium chloride.

For this micelle-containing organic polymer (G3), the diffraction angle (°) of the maximum peak was determined in the same manner as in Example 1. The result is shown in Table 2.

<Example 4>

190 parts of ethanol and 9 parts of 35% concentrated hydrochloric acid were placed in a glass vessel, and the mixture were stirred to be homogeneous. Then, 3 parts of the micelle-containing organic polymer (G1) obtained in Example 1 was added, and the mixture was heated to 40°C. Extraction was carried out at 40°C for 7 hours under ultrasonic irradiation (frequency: 15 kHz), the sheet was then taken out, washed with 10 parts of ethanol for three times and then dried at 25°C and 1 torr for 2 hours to give an organic polymer porous material (GE4) in the form of a sheet.

For this organic polymer porous material (GE4), the diffraction angle (°) of the maximum peak was determined in the same manner as in Example 1. The result is shown in Table 3.

A pore distribution curve was constructed for the organic polymer porous material by the nitrogen adsorption method (for measurements in the range of 0.3 nm to 50 nm) and mercury injection method (for measurements in the range of 50 nm to 500 nm), and the pore diameter showing a maximum peak and the value of V/Vmax (proportion of the total volume of pores having diameters within the range of ± 40% of the pore diameter showing a maximum peak in the whole pore volume) were determined. The results are shown in Table 3.

Nitrogen adsorption method: The apparatus used was AUTOSORB-1 GAS/SORPTION SYSTEM (product of Quantachrome Corporation).

Mercury injection method: The apparatus used was MERCURY PRESSURE POROSIMETER MOD 220 (product of Carlo Erba).

On the occasion of pore distribution curve measurements, the measurement specimen was prepared by carrying out pretreatment in the same manner as in X-ray diffractometry in Example 1.

The value of V/Vmax can be determined as follows: total pore volume of pores having diameters within the range of ±40% of the pore diameter showing a maximum peak/whole pore volume x 100. The whole pore volume was taken as the total volume of the pores having a diameter of 0.3 nm to 500 nm.

<Example 5>

An organic polymer porous material (GE5) in the form of a hollow cylinder was obtained in the same manner as in Example 4 except that 3 parts of the micelle-containing organic polymer (G2) obtained in Example 2 was used in lieu of the micelle-containing organic polymer (G1).

For this organic polymer porous material (GE5), the diffraction angle (°) of the maximum peak was determined in the same manner as in Example 1. The result is shown in Table 3.

For the organic polymer porous material (GE5), the maximum peak-showing pore diameter and V/Vmax were determined in the same manner as in Example 4. The results are shown in Table 3.

<Example 6>

An organic polymer porous material (GE6) in the form of a sheet was obtained in the same manner as in Example 4 except that 35% concentrated hydrochloric acid was not used and that 3 parts of the micelle-containing organic polymer (G3) obtained in Example 3 was used in lieu of the micelle-containing organic polymer (G1).

For this organic polymer porous material (GE6), the diffraction angle (°) of the maximum peak was determined in the same manner as in Example 1. The result is shown in Table 3.

For the organic polymer porous material (GE6), the maximum peak-showing pore diameter and V/Vmax were determined in the same manner as in Example 4. The results are shown in Table 3.

<Example 7>

The micelle-containing organic polymer (G1) obtained in Example 1 was placed in an electric oven allowing nitrogen to flow therethrough and, while-air was passed therethrough at a rate of 10 L/minute in advance, the temperature was raised to 250°C over 30 minutes and aging was carried out for 6 hours. Then, nitrogen was passed therethrough at a rate of 10 L/minute and the temperature was maintained at 250°C for 30 minutes. Then, the temperature was raised to 650°C over 1 hour, and baking was carried out at this temperature for 3 hours. Further, the temperature was raised to 800°C over 1 hour, and baking was carried out for 5 hours. A porous carbon material (MCG7) in the form of a sheet was obtained. Its shape retained the sheet form.

For the sheet-form porous carbon material (MCG7), the diffraction angle (°) of the maximum peak was determined in the same manner as in Example 1. The result is shown in Table 4.

For the porous carbon material (MCG7), the maximum peak-showing pore diameter and V/Vmax were determined in the same manner as in Example 4. The results are shown in Table 4.

<Example 8>

A porous carbon material (MCG8) was obtained in the same manner as in Example 7 except that the micelle-containing organic polymer (G2) obtained in Example 2 was used in lieu of the micelle-containing organic polymer (G1). Its shape retained the sheet form.

For the porous carbon material (MCG8), the diffraction angle (°) of the maximum peak was determined in the same manner as in Example 1. The result is shown in Table 4.

For the porous carbon material (MCG8), the maximum peak-showing pore diameter and V/Vmax were determined in the same manner as in Example 4. The results are shown in Table 4.

<Example 9>

A porous carbon material (MCG9) was obtained in the same manner as in Example 7 except that the organic polymer porous material (GE6) obtained in Example 6 was used in lieu of the micelle-containing organic polymer (G1). Its shape retained the sheet form.

For the porous carbon material (MCG9), the diffraction angle (°) of the maximum peak was determined in the same manner as in Example 1. The result is shown in Table 4.

For the porous carbon material (MCG9), the maximum peak-showing pore diameter and V/Vmax were determined in the same manner as in Example 4. The results are shown in Table 4.

<Example 10>

A glass kolben 1 was charged with 10 parts of phenol, 16 parts of 36% formalin, and 1.5 parts of 10% sodium hydroxide, and the mixture was stirred until it became homogeneous. After the atmosphere inside the kolben 1 was substituted with nitrogen gas, the mixture was stirred at 75°C at ordinary pressure in a tightly closed condition for 3 hours to give a prepolymer. Then, 7 parts of stearyltrimethylammonium chloride, 120 parts of deionized water and 2 parts of 35% hydrochloric acid were placed in a kolben 2, followed by stirring at room temperature until the mixture became homogeneous. Thereto was added with the content of the kolben 1, and the whole mixture was stirred at room temperature until it became homogeneous. Thereafter, the temperature was raised to 95°C, and the mixture was stirred for 1.5 hours. The resulting precipitate solid was collected by filtration and washed with two 50-part portions of deionized water to give a powdery, micelle-containing organic polymer (G10).

For the micelle-containing organic polymer (G10), the diffraction angle (°) of the maximum peak was determined in the same manner as in Example 1. The result is shown in Table 2.

<Example 11>

A micelle-containing organic polymer (G11) was obtained in the same manner as in Example 1 except that a glass kolben was used in lieu of the stainless steel autoclave and that 7 parts of stearyltrimethylammonium chloride was used in lieu of octyltrimethylammonium chloride.

For the micelle-containing organic polymer (G11), the diffraction angle (°) of the maximum peak was determined in the same manner as in Example 1. The result is shown in Table 2.

<Example 12>

A viscous resin was obtained in the same manner as in Example 1 except that a glass kolben was used in lieu of the stainless steel autoclave and that 7 parts of stearyltrimethylammonium chloride was used in lieu of octyltrimethylammonium chloride. 0.85 parts of hexamethylenetetramine was added to 13.1 parts of the viscous resin, the mixture was stirred until it became homogeneous, and the resulting resin was placed in a mold for molding into a sheet (4 cm x 5 cm, thickness 1 mm), which was then cured at 70°C for 120 hours to give a micelle-containing organic polymer (G12) in the form of a sheet.

For the micelle-containing organic polymer (G12), the diffraction angle (°) of the maximum peak was determined in the same manner as in Example 1. The result is shown in Table 2.

<Example 13>

An organic polymer porous material (GE13) in the form of a powder was obtained in the same manner as in Example 4 except that 3 parts of the micelle-containing organic polymer (G10) obtained in Example 10 was used in lieu of the micelle-containing organic polymer (G1).

For the organic polymer porous material (GE13), the diffraction angle (°) of the maximum peak was determined in the same manner as in Example 1. The result is shown in Table 3.

For the organic polymer porous material (GE13), the maximum peak-showing pore diameter and V/Vmax were determined in the same manner as in Example 4. The results are shown in Table 3.

<Example 14>

An organic polymer porous material (GE14) was obtained in the same manner as in Example 4 except that 3 parts of the micelle-containing organic polymer (G11) obtained in Example 11 was used in lieu of the micelle-containing organic polymer (G1).

For the organic polymer porous material (GE14), the diffraction angle (°) of the maximum peak was determined in the same manner as in Example 1. The result is shown in Table 3.

For the organic polymer porous material (GE14), the maximum peak-showing pore diameter and V/Vmax were determined in the same manner as in Example 4. The results are shown in Table 3.

<Example 15>

An organic polymer porous material (GE15) was obtained in the same manner as in Example 4 except that 3 parts of the micelle-containing organic polymer (G12) obtained in Example 12 was used in lieu of the micelle-containing organic polymer (G1).

For the organic polymer porous material (GE15), the diffraction angle (°) of the maximum peak was determined in the same manner as in Example 1. The result is shown in Table 3.

For the organic polymer porous material (GE15), the maximum peak-showing pore diameter and V/Vmax were determined in the same manner as in Example 4. The results are shown in Table 3.

<Example 16>

A porous carbon material (MCG16) in the form of a powder was obtained in the same manner as in Example 7 except that the micelle-containing organic polymer (G10) obtained in Example 10 was used in lieu of the micelle-containing organic polymer (G1).

For the porous carbon material (MCG16), the diffraction angle (°) of the maximum peak was determined in the same manner as in Example 1. The result is shown in Table 4.

For the porous carbon material (MCG16), the maximum peak-showing pore diameter and V/Vmax were determined in the same manner as in Example 4. The results are shown in Table 4.

<Example 17>

A porous carbon material (MCG17) in the form of a sheet was obtained in the same manner as in Example 7 except that the micelle-containing organic polymer (G11) obtained in Example 11 was used in lieu of the micelle-containing organic polymer (G1).

For the porous carbon material (MCG17), the diffraction angle (°) of the maximum peak was determined in the same manner as in Example 1. The result is shown in Table 4.

For the porous carbon material (MCG17), the maximum peak-showing pore diameter and V/Vmax were determined in the same manner as in Example 4. The results are shown in Table 4.

<Example 18>

A porous carbon material (MCG18) was obtained in the same manner as in Example 7 except that the micelle-containing organic polymer (G12) obtained in Example 12 was used in lieu of the micelle-containing organic polymer (G1). Its shape retained the sheet form.

For the porous carbon material (MCG18), the diffraction angle (°) of the maximum peak was determined in the same manner as in Example 1. The result is shown in Table 4.

For the porous carbon material (MCG18), the maximum peak-showing pore diameter and V/Vmax were determined in the same manner as in Example 4. The results are shown in Table 4.

<Comparative Example 1>

A sheet-shaped phenol resin (G19) was obtained in the same manner as in Example 1 except that octyltrimethylammonium chloride was not used.

For the sheet-shaped phenol resin (G19), the diffraction angle (°) of the maximum peak was determined in the same manner as in Example 1. The result is shown in Table 2.

<Comparative Example 2>

A carbon material (MCG19) was obtained in the same manner as in Example 7 except that the sheet-shaped phenol resin (G19) obtained in Comparative Example 1 was used in lieu of the micelle-containing organic polymer (G1) and that baking was carried out at 650°C for 3 hours, then the temperature was raised to 800°C over 1 hour, and baking was carried out for 5 hours, finally followed by steam activation for pore formation. A part of the sheet was collapsed.

For the carbon material (MCG19), the diffraction angle (°) of the maximum peak was determined in the same manner as in Example 1. The result is shown in Table 4.

For the carbon material (MCG19), the maximum peak-showing pore diameter and V/Vmax were determined in the same manner as in Example 4. The results are shown in Table 4.

Table 2

|  | d (mm) determined from X-ray diffractometry |
|---|---|
| Example 1 | 1.5 |
| Example 2 | 13.3 |
| Example 3 | 42.4 |
| Example 10 | 40.1 |
| Example 11 | 37.7 |
| Example 12 | 42.6 |
| Compar. Ex. 1 | No peak |

The micelle-containing organic polymers of Examples 1 to 3 and 10 to 12 each has a diffraction angle, while the polymer of Comparative Example 1 does not cause diffraction. Thus, it is found that the micelle-containing organic polymers of the invention have regularity in at least two of micelle diameter, micelle shape, and micelle arrangement. Further, it is found that since the organic polymer porous materials described below each has uniform pore diameter, the above-mentioned polymers have uniform micelle diameters. In other words, it is found that the micelle-containing organic polymers of the invention have uniform micelle diameters in polymer matrices and, further, the micelles have uniform shape or are arranged regularly.

Table 3

|  | Starting material | d(nm) determined from X-ray diffractometry | Maximum peak showing pore diameter (nm) | V/Vmax (%) |
|---|---|---|---|---|
| Example 4 | G1 | 1.4 | 1.0 0 | 87 |
| Example 5 | G2 | 10.3 | 8.9 | 87 |
| Example 6 | G3 | 38.5 | 30.5 | 83 |
| Example 13 | G10 | 35.1 | 25.4 | 84 |
| Example 14 | G11 | 30.6 | 20.1 | 86 |
| Example 15 | G12 | 29.3 | 29.3 | 81 |

It is found that the organic polymer porous materials of Examples 4 to 6 and 13 to 15 have large V/Vmax values, hence have uniform pore diameters. Further, it is found that since they have angles of X-ray diffraction and d values can be determined therefor, they have uniform pore shapes or regular pore arrangements.

Table 4

|  | Starting material | d(nm) determined from X-ray diffractometry | Maximum peak showing pore diameter (nm) | V/Vmax (%) |
|---|---|---|---|---|
| Example 7 | G1 | 1.3 | 0.8 | 86 |
| Example 8 | G2 | 10.1 | 8.0 | 83 |
| Example 9 | GE6 | 33.8 | 27.1 | 75 |
| Example 16 | G10 | 29.3 | 22.3 | 83 |
| Example 17 | G11 | 20.1 | 15.4 | 81 |
| Example 18 | G12 | 32.7 | 26.9 | 74 |
| Compar.Ex. 2 | G10 | No peak | 2.1 | 45 |

In Examples 7 to 9 and 16 to 18, the original shapes were retained even after the step of baking for carbonization.
It is found that the porous carbon materials of Examples 7 to 9 and 16 to 18 have large V/Vmax values and, therefore, they have uniform pore diameters. Further, it is found that since they have angles of X-ray diffraction and d values can be determined therefor, they have uniform pore shapes or regular pore arrangements.

On the contrary, the carbon material of Comparative Example 2 has relatively uniform pore diameter but has small V/Vmax value as compared with Examples, hence is inferior in pore diameter uniformity to Examples. Further, it did not cause X-ray diffraction. Thus, it is found that it does not has uniform pore shape and has no regular pore arrangement, either.

INDUSTRIAL APPLICABILITY

The micelle-containing organic polymer of the invention can be processed with ease since it is an organic material. It is excellent in film characteristics as well. The organic polymer porous material and porous carbon material produced by using this polymer can retain the shape of the micelle-containing organic polymer as produced, namely they can have various shapes such as lumps, fibers, sheets and films. Thus, the micelle-containing organic polymer of the invention contains micelles which are uniform in particle size and which have uniform shape or are arranged regularly, and their shape can be retained as such. Therefore, the pores in the organic polymer porous material and porous carbon material obtained from such micelle-containing organic polymer become to have uniform pore diameter and uniform pore shape or regular arrangement. And, owing to such uniformity and regularity, the micelle-containing organic polymer, organic polymer porous material and porous carbon material of the invention exhibit excellent performance characteristics such as heat insulation, separability and adsorption ability. When the porous carbon material is used as electric double layer capacitor electrode materials, its uniform pores diameter make it possible to increase the effectively-acting electrode surface area and thus render electric double layers higher in capacity.

Furthermore, the organic polymer porous material and porous carbon material of the invention can be produced without using hydrofluoric acid, which is hazardous, and, therefore, the organic polymer porous material and porous carbon material can be provided very safely and in a simple and easy manner.

**Claims**

1. A micelle-containing organic polymer
   which comprises at least one peak in its X-ray diffraction pattern,
   at least one pair of the diffraction angle ($2\theta$) and the lattice spacing (d) of said peak satisfying the relation (1) given below:

$$2\theta = 2\sin^{-1} (\lambda/2d) \tag{1}$$

(in the formula, $\lambda$ represents the wavelength (nm) of the characteristic X-ray K$\alpha$1)
   and d being at least one value within the range of not less than 0.8 nm to not more than 150 nm.

2. The micelle-containing organic polymer according to Claim 1,
   wherein the micelle is formed of a surfactant (A) in an organic polymer (B) constituting a polymer matrix.

3. The micelle-containing organic polymer according to Claim 2,
   wherein the surfactant (A) is a cationic surfactant (A2).

4. The micelle-containing organic polymer according to Claim 3,
   wherein the cationic surfactant (A2) is a quaternary ammonium salt type cationic surfactant (A2a).

5. The micelle-containing organic polymer according to any one of Claims 2 to 4
   which contains the surfactant (A) in an amount of not less than 0.5 parts by weight per 100 parts by weight of the organic polymer (B).

6. The micelle-containing organic polymer according to any one of Claims 2 to 5,
   wherein the organic polymer (B) is a thermosetting resin.

7. The micelle-containing organic polymer according to any one of Claims 2 to 5,
   wherein the organic polymer (B) is at least one thermosetting resin (B2) selected from the group consisting of crosslinked/cured materials (B2-1) derived from thermosetting resins (B1a) obtainable by introducing a crosslinking reactive group into thermoplastic resins (B1); crosslinked resins (B2-2) derived from a constituent monomer of the thermoplastic resins (B1) and a crosslinking monomer; phenol resins (B2-4), and furan-resins (B2-5).

8. A method of producing a micelle-containing organic polymer
   which comprises forming micelles of the surfactant (A) in a monomer and/or prepolymer, and then subjecting the monomer and/or prepolymer to polymerization and curing.

9. An organic polymer porous material
   which comprises the total volume of pores having diameters within the range of ± 40% of the pore diameter Dmax showing a maximum peak in a pore diameter distribution curve is not smaller than 50% by volume based on the total pores volume.

10. The organic polymer porous material according to Claim 9
    which comprises at least one peak in its X-ray diffraction pattern,
    at least one pair of the diffraction angle (2θ) and the lattice spacing (d) of said peak satisfying the relation (1) given below:

$$2\theta = 2\sin^{-1}(\lambda/2d) \tag{1}$$

(in the formula, λ represents the wavelength (nm) of the characteristic X-ray Kα1)
    and d being at least one value within the range of not less than 0.8 nm to not more than 150 nm.

11. The organic polymer porous material according to Claim 9 or 10,
    wherein the pore diameter Dmax showing a maximum peak in the pore diameter distribution curve is not smaller than 0.3 nm but not larger than 100 nm.

12. The organic polymer porous material according to any one of Claims 9 to 11,
    wherein the organic polymer is a thermosetting resin.

13. The organic polymer porous material according to any one of Claims 9 to 12,
    wherein the organic polymer (B) is at least one thermosetting resin (B2) selected from the group consisting of crosslinked/cured materials (B2-1) derived from thermosetting resins (B1a) obtainable by introducing a crosslinking reactive group into thermoplastic resins (B1); crosslinked resins (B2-2) derived from a constituent monomer of the thermoplastic resins (B1) and a crosslinking monomer; phenol resins (B2-4), and furan resins (B2-5).

14. A method of producing an organic polymer porous material
    which comprises forming micelles of the surfactant (A) in a monomer and/or prepolymer and then subjecting the monomer and/or prepolymer to polymerization and curing to give a micelle-containing organic polymer, and further removing the surfactant (A) from said polymer.

15. The method of producing an organic polymer porous material according to Claim 14,
    wherein the surfactant (A) is removed by baking and/or solvent extraction.

16. A porous carbon material
    which comprises the total volume of pores having diameters within the range of ± 40% of the pore diameter Dmax showing a maximum peak in a pore diameter distribution curve is not smaller than 50% by volume based on the total volume of pores.

17. The porous carbon material according to Claim 16
    which comprises at least one peak in its X-ray diffraction pattern,
    at least one pair of the diffraction angle (2θ) and the lattice spacing (d) of said peak satisfying the relation (1) given below:

$$2\theta = 2\sin^{-1}(\lambda/2d) \tag{1}$$

(in the formula, $\lambda$ represents the wavelength (nm) of the characteristic X-ray K$\alpha$1)

and d being at least one value within the range of not less than 0.8 nm to not more than 150 nm.

18. The porous carbon material according to Claim 16 or 17,

wherein the pore diameter Dmax showing a maximum peak in the pore diameter distribution curve is not smaller than 0.3 nm but not larger than 100 nm.

19. An electrode

which comprises the porous carbon material according to Claim 16.

20. An adsorbent

which comprises the porous carbon material according to Claim 16.

21. A method of producing a porous carbon material

which comprises forming micelles of the surfactant (A) in a monomer and/or prepolymer and then subjecting the monomer and/or prepolymer to polymerization and curing to give a micelle-containing organic polymer, and further baking said polymer for carbonization.

Fig. 1

Fig. 2

Fig. 3

Fig. 4

## INTERNATIONAL SEARCH REPORT

| International application No. |
|---|
| PCT/JP03/06978 |

**A. CLASSIFICATION OF SUBJECT MATTER**
Int.Cl$^7$ C08L101/00, C08K5/09, C08J9/26, C01B31/08, H01G9/058

According to International Patent Classification (IPC) or to both national classification and IPC

**B. FIELDS SEARCHED**

Minimum documentation searched (classification system followed by classification symbols)
Int.Cl$^7$ C08L1/00-101/16, C08K3/00-13/08, C08J9/26, C01B31/08, H01G9/058

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X | EP 289238 A (UNILEVER NV),<br>02 November, 1988 (02.11.88),<br>Claims; examples<br>& JP 63-280749 A<br>Claims; examples<br>& US 4985468 A          & US 5021462 A | 1-21 |
| X | JP 60-1238 A (Kanebo, Ltd.),<br>07 January, 1985 (07.01.85),<br>Claims; examples<br>(Family: none) | 1-21 |
| A | JP 7-82028 A (Hitachi Chemical Co., Ltd.),<br>28 March, 1995 (28.03.95),<br>Claims; examples<br>(Family: none) | 1-21 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 October, 2003 (02.10.03) | 14 October, 2003 (14.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/06978 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-188565 A (Maruzen Petrochemical Co., Ltd.), 22 July, 1997 (22.07.97), Claims; examples (Family: none) | 1-21 |

Form PCT/ISA/210 (continuation of second sheet) (July 1998)